# EUROPEAN PATENT APPLICATION

(11) **EP 4 838 468 A1**
(43) Date of publication of application: **11.11.2026**
(21) Application number: 26176447.6
(22) Date of filing: 05.05.2026
(51) Int. Cl.: G06T 7/62

(54) **SYSTEM TO ANALYZE SOIL CLODS, METHOD OF ANALYZING SOIL CLODS, AND WORKING VEHICLE**

(30) Priority: 09.05.2025 JP 2025078818
(71) Applicant: KUBOTA CORPORATION, Osaka-shi, Osaka 530-0011 (JP)
(72) Inventor: KOMIYA, Yuto, Sakai-shi, Osaka 590-0908 (JP); KITAJIMA, Toshihiro, Sakai-shi, Osaka 590-0908 (JP); SAKAKIBARA, Yoshihiro, Sakai-shi, Osaka 590-0908 (JP)
(74) Representative: Müller-Boré & Partner Patentanwälte PartG mbB

(57) **Abstract**

A system (100) to analyze soil clods on a ground surface of an agricultural field includes a sensor assembly (11) including a sensor (11a) oriented toward the ground surface, and a processor (12). The sensor assembly measures distances to points-of-measurement (P1) on the ground surface, and generates and outputs primary point cloud data indicating three-dimensional positions of the points-of-measurement including measured values of the distances. The processor receives the primary point cloud data, calculates: characteristic values based on the measured values of the distances in the primary point cloud data; secondary point cloud data indicating three-dimensional positions of points-of-reference (P2) including the characteristic values based on the primary point cloud data; an approximated curved surface (M2) based on the secondary point cloud data; and depths of the points-of-measurement with respect to the approximated curved surface, and generates and outputs soil clod information about the soil clods based on the depths of the points-of-measurement.

## Description

### BACKGROUND OF THE INVENTION

### Field of the Invention

The present invention relates to techniques of analyzing soil clods on ground surfaces of agricultural fields.

### Description of the Related Art

In order to improve the performance of work in an agricultural field, the productivity of crops, and/or the like, it is necessary to detect soil clods on a ground surface of an agricultural field and adjust the size of the soil clods. Thus, for example, in U.S. Patent Application Publication No. 2022/0256759, an imaging device provided in or on a working vehicle captures an image of an agricultural field, and a computing system processes the image as follows. A plurality of pixels in the image are classified as soil pixels associated with soil, and a local maximum in the image is identified as the position of a soil clod candidate based on pixel heights associated with the soil pixels. Then, a first ray extending in a first direction and a second ray extending in a second direction perpendicular to the first direction are generated from the local maximum value to an edge detected based on an edge condition, and it is determined whether there are soil clods with a certain size based on the lengths or proportions of the first ray and the second ray. A slope surface corresponding to the inclination of the agricultural field is generated based on segment heights associated with a plurality of segments in the image, and a slope image corrected using the slope surface is generated.

In U.S. Patent Application Publication No. 2019/0387659, an automatic agricultural field measurement system including an imaging device and various sensors such as a distance measuring sensor provided in or on a working vehicle measures an average soil clod size, a soil clod density, and so forth as a soil roughness state of an agricultural field, and generates agricultural field measurement data according to automatic system metrics. Then, a computing system uses a calibration model to convert the agricultural field measurement data into agricultural data according to agricultural metrics. Further, the computing system operates at least one of a working vehicle or a working device towed by the working vehicle based on the agricultural data.

### SUMMARY OF THE INVENTION

With the technique of the related art as described above, a plane or a slope surface inclined at a certain angle is used as a reference surface, and soil clods are determined based on a distance from the reference surface to soil, and thus, when a plurality of irregular inclinations and/or undulations are on the ground surface of the agricultural field, the reference surface does not correspond to the inclinations and/or undulations, and the soil clods cannot be appropriately analyzed.

In view of the above-described problems, an object of the present invention is to appropriately analyze soil clods on a ground surface of an agricultural field.

A system or a working machine to analyze soil clods on a ground surface of an agricultural field according to an example embodiment of the present invention includes an agricultural field sensor assembly including at least one range sensor oriented toward the ground surface, and an information processor. The agricultural field sensor assembly is configured to: measure distances to a plurality of points-of-measurement on the ground surface; and generate primary point cloud data indicating three-dimensional positions of the plurality of points-of-measurement including measured values of the distances, and output the primary point cloud data. The information processor is configured to: receive the primary point cloud data, and calculate a plurality of characteristic values based on the measured values of the distances included in the primary point cloud data; calculate secondary point cloud data indicating three-dimensional positions of a plurality of points-of-reference including the plurality of characteristic values based on the primary point cloud data; calculate an approximated curved surface based on the secondary point cloud data; calculate depths of the plurality of points-of-measurement with respect to the approximated curved surface based on the approximated curved surface and the measured values of the distances; and generate soil clod information relating to the soil clods based on the depths of the plurality of points-of- measurement, and output the soil clod information.

A method of analyzing soil clods on a ground surface of an agricultural field according to an example embodiment of the present invention includes: causing an agricultural field sensor assembly including at least one range sensor oriented toward the ground surface to: measure distances to a plurality of points-of-measurement on the ground surface; and generate primary point cloud data indicating three-dimensional positions of the plurality of points-of-measurement including measured values of the distances, and output the primary point cloud data; and causing an information processor to: receive the primary point cloud data, and calculate a plurality of characteristic values based on the measured values of the distances included in the primary point cloud data; calculate secondary point cloud data indicating three-dimensional positions of a plurality of points-of-reference including the plurality of characteristic values based on the primary point cloud data; calculate an approximated curved surface based on the secondary point cloud data; calculate depths of the plurality of points-of-measurement with respect to the approximated curved surface based on the approximated curved surface and the measured values of the distances; and generate soil clod information relating to the soil clods based on the depths of the plurality of points-of- measurement, and output the soil clod information.

With one or more example embodiments of the present invention, even when there are a plurality of irregular inclinations and/or undulations on a ground surface of an agricultural field, soil clods on a ground surface can be appropriately analyzed.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1A is a side view of an example of a working vehicle.
FIG. 1B is a side view illustrating an example of a working device.
FIG. 2 is a configuration diagram of an example of a soil clod analysis system.
FIG. 3 is a flowchart presenting an example of an operation of the soil clod analysis system.
FIG. 4 is a flowchart presenting an example of details of a soil clod analysis process.
FIG. 5 is a flowchart presenting an example of details of a secondary point cloud data calculation process.
FIG. 6 is a diagram illustrating an example of a three-dimensional coordinate system indicating primary point cloud data.
FIG. 7 is a plan view of an example of cells defined on an X-Y plane.
FIG. 8 is a diagram presenting an example of mesh information.
FIG. 9 is a diagram illustrating an example of an approximated curved surface.
FIG. 10 is a diagram illustrating an example of an approximated curved surface and points-of-measurement.
FIG. 11 is a flowchart presenting an example of details of a soil clod information generation process.
FIG. 12 is an example of a first histogram presenting a distribution of depths of a plurality of points-of-measurement (first index values for soil clods).
FIG. 13 is an example of a second histogram presenting the distribution of the depths of the plurality of points-of-measurement.
FIG. 14 is an example of a third histogram presenting a distribution of second index values for the soil clods.
FIG. 15 is a diagram presenting an example of sieve information.
FIG. 16 is an example of a fourth histogram presenting a distribution of the second index values for the soil clods.
FIG. 17 is an example of a fifth histogram presenting a distribution of third index values for the soil clods.
FIG. 18 is an example of a pie chart presenting proportions of the third index values (volume index values) for the soil clods.
FIG. 19 is an example of a bar chart presenting the proportions of the third index values (volume index values) for the soil clods.
FIG. 20 is an example of a pie chart presenting proportions of the absolute values of the depths of the plurality of points-of- measurement (area index values for the soil clods).
FIG. 21 is a diagram presenting an example of a relationship among the number of the soil clods, a plurality of grain size index values, a plurality of area index values, and a plurality of volume index values.
FIG. 22 is an example of a pie chart presenting proportions of the grain size index values for the soil clods.
FIG. 23 is an example of a pie chart presenting proportions of the area index values for the soil clods.
FIG. 24 is an example of a pie chart presenting proportions of the volume index values for the soil clods.
FIG. 25 is a view illustrating an example of soil clod information displayed on a monitor screen.
FIG. 26 is a view illustrating an example of a plurality of pieces of soil clod information displayed on the monitor screen.
FIG. 27 is a view illustrating an example of control information displayed on the monitor screen.
FIG. 28 is a flowchart presenting an example of a ground surface state determination process.

### DETAILED DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

Hereinafter, example embodiments of the present invention will be described with reference to the drawings. Note that, for convenience, the same reference signs are given to the same configurations and corresponding configurations.

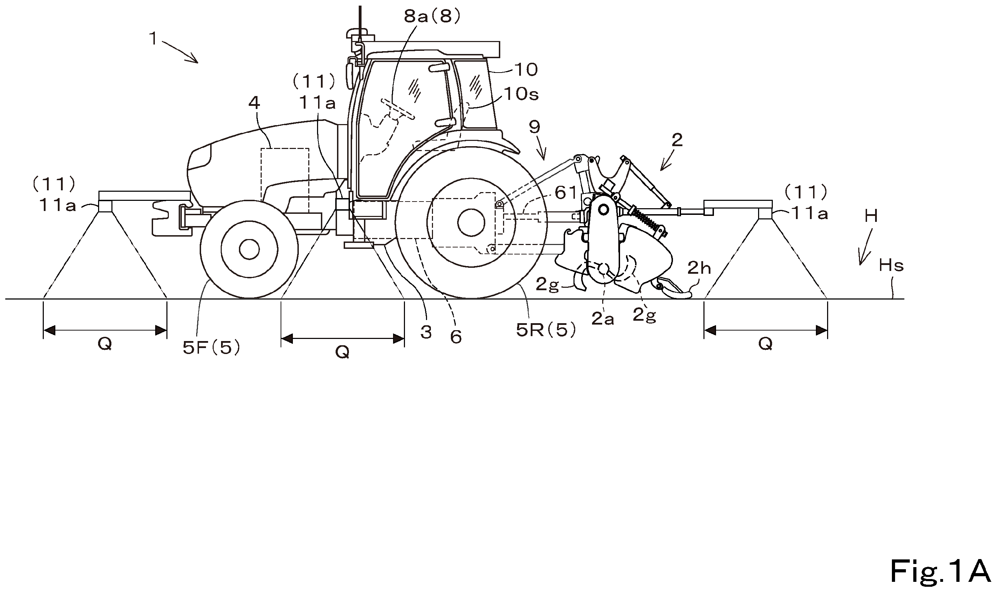

FIG. 1A is a side view of an example of a working vehicle 1. The working vehicle 1 performs ground work using a working device 2 while traveling in an agricultural field H. The traveling of the working vehicle 1 and the ground work using the working device 2 can be performed by automatic operation (including automatic control, autonomous control, and remote control), and can also be performed by manual operation. In the present example embodiment, the working vehicle 1 is a tractor as an example of an agricultural machine. The working vehicle 1 may be an agricultural machine other than a tractor, a construction machine such as an excavator or a wheel loader, or another working machine.

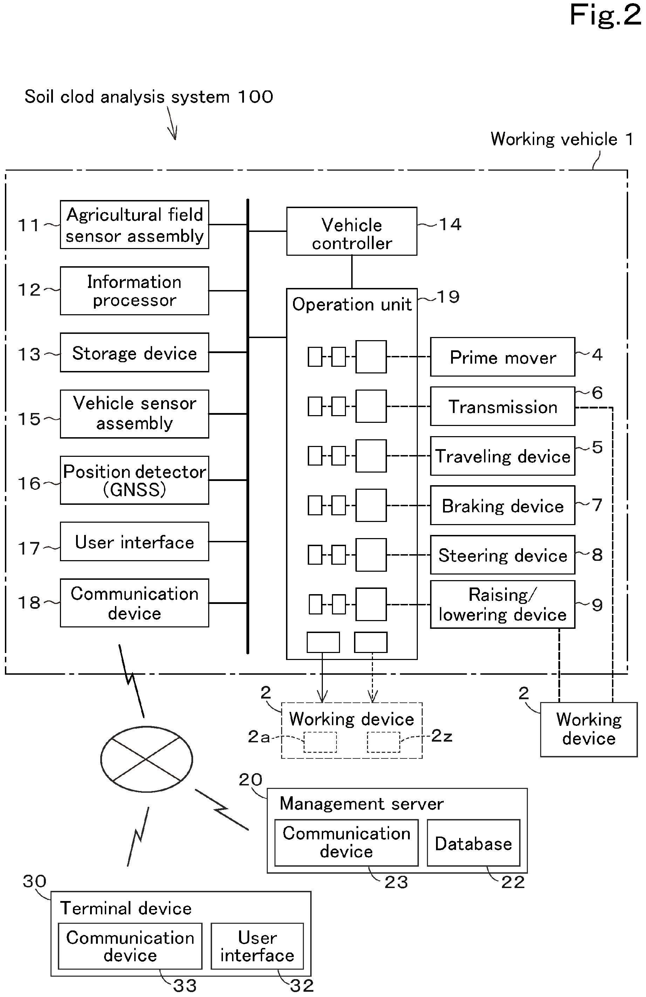

The working vehicle 1 includes a vehicle body 3, a prime mover 4, at least one traveling device 5, a transmission 6, a braking device 7 (FIG. 2), a steering device 8, and a raising/lowering device 9. The at least one traveling device 5 includes a traveling device 5 provided on a left portion and a traveling device 5 provided on a right portion of the vehicle body 3. The traveling devices 5 support the vehicle body 3 and cause the vehicle body 3 to travel. In the present example embodiment, the traveling devices 5 define a wheel track assembly including a pair of left and right front wheels 5F and a pair of left and right rear wheels 5R. Alternatively or additionally, the traveling devices 5 may define a crawler track assembly including a pair of left and right crawlers, or may define a composite track assembly including wheels (tires) and crawlers. Alternatively or additionally, the traveling devices 5 may define a track assembly including a plurality of legs, or may define a track assembly in which wheels or crawlers are coupled to landing portions of at least some of the plurality of legs. In summary, the traveling devices 5 define a track assembly that includes wheels, crawlers, and/or legs and is configured to cause the vehicle body 3 to travel (move).

The prime mover 4, the transmission 6, and the steering device 8 are provided in or on the vehicle body 3. The prime mover 4 includes an engine (diesel engine, gasoline engine), an electric motor, or the like. The transmission 6 includes a hydro-static transmission (HST) or a hydro-mechanical transmission (HMT). The transmission 6 varies the propelling force of the traveling devices 5 by speed-changing the power of the prime mover 4 and transmitting the power to the traveling devices 5 to change (adjust) the traveling speed of the vehicle body 3 (working vehicle 1). The transmission 6 includes a hydraulic forward/rearward travel clutch that switches the traveling devices 5 and the vehicle body 3 between forward travel and rearward travel. The braking device 7 brakes the traveling devices 5. More specifically, the braking device 7 brakes the driving wheels included in the traveling devices 5.

For example, the steering device 8 changes the orientation (steered angle) of the front wheels 5F to steer the vehicle body 3. Alternatively, the steering device 8 may be a four-wheel steering type steering device that changes the orientation of each of the wheels 5F and 5R to steer the vehicle body 3. Note that, when the traveling devices 5 include the pair of left and right crawlers, the working vehicle 1 may be provided with, instead of the steering device 8, a hydraulic or electric drive circuit that changes the rotation direction and the number of revolutions of each crawler to change the traveling direction of the vehicle body 3. Alternatively, when the traveling devices 5 include the plurality of legs, the working vehicle 1 may be provided with, instead of the steering device 8, a hydraulic or electric drive circuit that operates each of the legs to change the traveling direction of the vehicle body 3.

A cabin 10 is provided on an upper portion of the vehicle body 3. The cabin 10 is provided with an operator's seat 10s and a steering handle (also referred to as "steering wheel") 8a. The steering handle 8a is included in the steering device 8. Instead of the steering handle 8a, an operation interface such as a lever or a joystick may be included in the steering device 8. The cabin 10 is provided with manual operators such as levers, pedals, dials, and switches for manually operating the working vehicle 1.

The raising/lowering device 9 including a three-point linkage or the like is provided at a rear portion of the vehicle body 3. The working device 2 is attachable to and detachable from the raising/lowering device 9. In other words, the working device 2 is coupled to the rear portion of the vehicle body 3 via the raising/lowering device 9. The working device 2 is coupled to the raising/lowering device 9, and the traveling devices 5 are driven. Thus, the working vehicle 1 (vehicle body 3) travels, and the working device 2 moves. Also, the working device 2 is raised/lowered by the raising/lowering device 9. Thus, the posture of the working device 2 (for example, the position in an up-down direction Z and the orientation with respect to the vehicle body 3) is changed. The raising/lowering device 9 is also referred to as a hitch with a lift.

The working device 2 is also referred to as an attachment or an implement. The working device 2 illustrated in FIG. 1A includes a rotary. The working device 2 includes a rotor 2d, a plurality of working blades (cultivating blades) 2g, and a working plate (soil pressing plate) 2h. The rotor 2d is rotatably supported by a left-right shaft parallel to a left-right direction (a vehicle-width direction of the working vehicle 1). The plurality of working blades 2g are coupled to the peripheral surface of the rotor 2d and cultivate soil in the agricultural field H. The working plate 2h presses the soil cultivated by the working blades 2g to flatten a ground surface Hs. The working blades 2g and the working plate 2h are examples of a working tool included in the working device 2.

Some working devices 2 each of which performs at least one ground work of cultivation, coarse plowing, surface layer mixing, reversal plowing, stirring plowing, subsoil crushing, clod breaking, leveling, flattening, compaction, or excavation in a state of being in contact with (landing on) the soil can be attached to the rear portion of the vehicle body 3 via the raising/lowering device 9. These working devices 2 include rotaries, harrows and plows to perform ground works including clod breaking. Each of the working devices such as harrows also includes at least one of a rotor, a working blade, or a working plate. Other working devices 2 each of which performs at least one work of seeding, transplanting, spreading of materials such as fertilizer or agricultural chemicals, harvesting of crops, reaping of grass or the like, or raking of grass can also be attached to the rear portion of the vehicle body 3 via the raising/lowering device 9.

The working devices 2 that can each be used with the working vehicle 1 include mounted working devices 2 each of which is supported by the working vehicle 1 via the raising/lowering device 9, and towed working devices 2 each of which is towed by the working vehicle 1. When one of the mounted working devices 2 to perform ground works is coupled to the raising/lowering device 9, the working device 2 is lowered by the raising/lowering device 9, and the working blades 2g included in the working device 2 bite into the soil during the ground work. The position of the working blades 2g in the vertical direction and the work depth (cultivation depth or the like), which is the depth to which the working blades 2g bite into the soil, are adjusted by the raising/lowering device 9 raising/lowering the working device 2. When the ground work is not performed, the working device 2 is raised by the raising/lowering device 9, and the working blades 2g are separated from the ground surface Hs. The working blades 2g are rotated about an axis parallel to the vehicle-width direction of the working vehicle 1 in a state of biting into the soil, and thus the soil clods in the agricultural field H are crushed and the soil is cultivated.

Each of the towed working devices 2 that perform ground works is coupled to the working vehicle 1 via the raising/lowering device 9, and is raised/lowered by the raising/lowering device 9 to adjust the work depth. Alternatively, instead of the raising/lowering device 9, a hitch (linkage) such as a drawbar may be provided on the vehicle body 3, and the towed working devices 2 each of which performs ground work may each be coupled to the vehicle body 3 via the hitch. In this case, an auxiliary raising/lowering device (also referred to as an "auxiliary lift") 2a (FIG. 2) including a hydraulic or electric auxiliary lift actuator such as a hydraulic cylinder may be provided on or in the working device 2. The auxiliary lift actuator may be actuated by the hydraulic pressure of the hydraulic fluid supplied from the working vehicle 1 via a hose or the like or by the electric power supplied from the working vehicle 1 via an electric cable or the like, and the auxiliary raising/lowering device 2a may raise/lower at least the working blades 2g of the working device 2.

When the working device 2 including the working blades 2g and so forth is coupled to the vehicle body 3, a power take-off (PTO) shaft 61 of the working vehicle 1 and a connector of the working device 2 are connected to each other via a joint. In this regard, the power of the prime mover 4 is transmitted to the working device 2 via the PTO shaft 61, and the rotor 2d, the working blades 2g, and so forth are rotationally driven by the transmitted power.

As another example, a hydraulic or electric auxiliary actuator for rotation that rotationally drives the working blades 2g and so forth may be provided in the working device 2, and the auxiliary actuator for rotation may be actuated by the pressure of the hydraulic fluid or the electric power supplied from the working vehicle 1 to rotationally drive the working blades 2g and so forth.

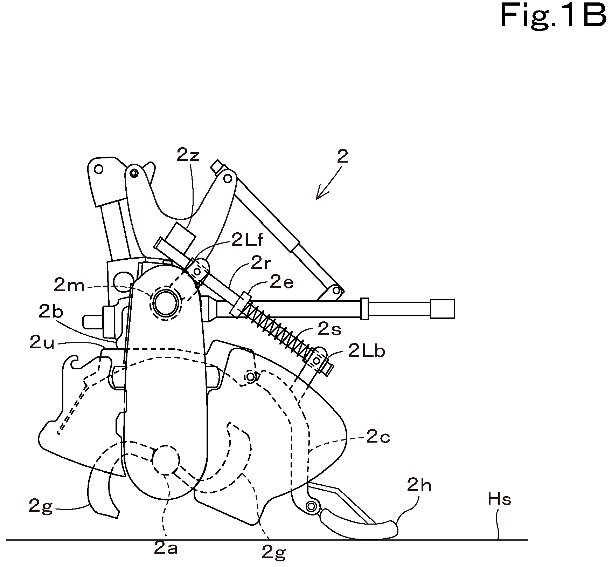

In the working device 2 including the working plate 2h, the contact pressure of the working plate 2h against the soil can be adjusted. FIG. 1B is a side view of an example of the working device 2. The working device 2 includes components illustrated in FIG. 1B. The working plate 2h is coupled to a rear cover 2c. The rear cover 2c is rotatably supported by the upper cover 2u via a left-right shaft. An upper cover 2u is fixed to a main body 2b of the working device 2.

At least one rod 2r is provided higher than the covers 2c and 2u. A front end portion and a rear end portion of the rod 2r are inserted through the inside of at least one tube body 2Lf and the inside of at least one tube body 2Lb, respectively. A stopper is attached to each of both ends of the rod 2r so that the rod 2r does not come off from the tube bodies 2Lf and 2Lb. A pair of left and right shaft portions protruding leftward and rightward, respectively, are provided on the outer peripheral surface of each of the tube bodies 2Lf and 2Lb. The shaft portion of the front tube body 2Lf is rotatably supported by a bracket fixed to an upper portion of a beam 2m. The beam 2m is fixed to the main body 2b. The shaft portion of the rear tube body 2Lb is rotatably supported by a bracket fixed to an upper portion of the rear cover 2c.

The rod 2r is inserted through the inside of at least one coil spring 2s. At least one lock body 2e that supports a front end portion of the coil spring 2s is fixed to the outer peripheral surface of the rod 2r. The fixed position of the lock body 2e with respect to the rod 2r can be adjusted. For example, the lock body 2e includes a fastening mechanism. By rotating the lock body 2e in a first direction, the fastening mechanism fastens the rod 2r, and the lock body 2e is fixed to the rod 2r. Also, by rotating the lock body 2e in a second direction opposite to the first direction, the fastening mechanism no longer fastens the rod 2r, and the lock body 2e becomes movable along the rod 2r. A plurality of grooves or a plurality of graduations defining a guide of the fixed position of the lock body 2e are provided on the outer peripheral surface of the rod 2r.

As another example, a fixing tool such as a pin or a screw may fix the lock body 2e to the rod 2r. In this case, by attaching the fixing tool to the lock body 2e or by increasing the screwing force of the fixing tool against the lock body 2e, the lock body 2e is fixed to the rod 2r. Also, by removing the fixing tool from the lock body 2e or by reducing the screwing force of the fixing tool against the lock body 2e, the lock body 2e is no longer fixed to the rod 2r, and the lock body 2e becomes movable along the rod 2r.

The tube body 2Lb is pushed rearward by the resilient force of the coil spring 2s, and the rear cover 2c and the working plate 2h are pushed downward via the bracket. Thus, when the working device 2 is lowered to a predetermined position by the raising/lowering device 9 or the like during work using the working device 2, the working plate 2h comes into contact with the soil at a predetermined pressure. Since the fixed position of the lock body 2e can be manually adjusted, the contact pressure of the working plate 2h against the soil can also be manually adjusted. As the fixed position of the lock body 2e approaches the tube body 2Lb, the pressing force of the coil spring 2s against the tube body 2Lb increases, and the contact pressure of the working plate 2h against the soil also increases.

The contact pressure of the working plate 2h against the soil can also be adjusted automatically by an auxiliary adjustment actuator 2z. The auxiliary adjustment actuator 2z is a hydraulic or electric cylinder or motor. By moving the rod 2r or the lock body 2e in the axial direction of the rod 2r using the auxiliary adjustment actuator 2z, the interval between the rear tube body 2Lb and the lock body 2e changes, the pressing force of the coil spring 2s changes, and the contact pressure of the working plate 2h against the soil is adjusted. As the amount of rearward movement of the rod 2r or the lock body 2e with respect to the tube body 2Lb increases, the pressing force of the coil spring 2s against the tube body 2Lb increases, and the contact pressure of the working plate 2h against the soil also increases.

Note that, when a cylinder is used as the auxiliary adjustment actuator 2z, a rod of the cylinder and the rod 2r are coupled to each other, and the rod 2r is moved in the axial direction by the extension/retraction actuating force of the cylinder. When a motor is used as the auxiliary adjustment actuator 2z, a rack is provided on the peripheral surface of the rod 2r, and the rotational driving force of the motor is transmitted to the rack via one or more gears to move the rod 2r in the axial direction. At least one of the tube body 2Lf or the tube body 2Lb may be screwed to the rod 2r. The lock body 2e and the rod 2r may be screwed to each other. The rotational driving force of the motor is transmitted to the lock body 2e via the one or more gears to rotate the lock body 2e so that the lock body 2e is moved in the axial direction of the rod 2r relative to the rod 2r and the tube body 2Lb. A pair of left and right assemblies each of which includes the rod 2r, the tube bodies 2Lf and 2Lb, the coil spring 2s, and the lock body 2e are provided. The auxiliary adjustment actuator 2z may be provided in a pair on the left and right, or only one auxiliary adjustment actuator 2z may be provided. For example, the power from the one auxiliary adjustment actuator 2z may be transmitted to the left and right rods 2r by a transmission mechanism including a shaft and a gear.

As described above, the working device 2 includes a manual adjustment mechanism (including the tube body 2Lb, the coil spring 2s, the lock body 2e, and so forth) that manually adjusts the contact pressure of the working plate 2h against the soil, and an automatic adjustment mechanism (including the auxiliary adjustment actuator 2z, the rod 2r, the tube bodies 2Lf and 2Lb, the coil spring 2s, the lock body 2e, and so forth) that automatically adjusts the contact pressure.

Note that a manual adjustment structure, an automatic adjustment structure, and an automatic adjustment device described above are examples, and this does not imply any limitation. In the above-described example embodiment, the working plate 2h and the rear cover 2c are separate from each other. Alternatively, a working plate may be integral with a rear cover. In other words, the working device 2 may include a working plate that also defines a rear cover, instead of the working plate 2h and the rear cover 2c. By using such a working plate that also defines a rear cover, the period of time for which the soil is retained in front (on the side where the working vehicle 1 is present) of the working plate increases, the soil is easily crushed into small pieces, and the ground surface Hs is easily pressed and flattened by the working plate.

FIG. 2 is a configuration diagram of an example of a soil clod analysis system 100. The soil clod analysis system 100 is a system to analyze soil clods on a ground surface Hs of an agricultural field H, and is also a system to assist ground work that is performed by the working vehicle 1 or the like in the agricultural field H. The soil clod analysis system 100 includes the working vehicle 1. The working vehicle 1 includes an agricultural field sensor assembly 11, an information processor 12, a storage device 13, a vehicle controller 14, a vehicle sensor assembly 15, a position detector 16, a user interface 17, a communication device 18, and an operation unit 19. In other words, the soil clod analysis system 100 includes the devices 11 to 19. The devices 11 to 19 are connected so as to be able to communicate with each other via an in-vehicle network such as CAN, LIN, or FlexRay built in the working vehicle 1.

The agricultural field sensor assembly 11 includes at least one range sensor 11a. The range sensor 11a is at least one of a laser scanner of such as light detection and ranging, laser imaging detection and ranging (LiDAR), a time of flight (ToF) sensor, a stereo camera, or the like. For example, as illustrated in FIG. 1A, the range sensor 11a is provided in or on at least one of the working vehicle 1 or the working device 2 coupled to the vehicle body 3 (working vehicle 1) and oriented toward the ground surface Hs of the agricultural field H.

The range sensor 11a has a detection range for detecting a portion of the ground surface Hs of the agricultural field H. A detection range Q in which the agricultural field sensor assembly 11 detects a portion of the ground surface Hs is defined in advance (predetermined) based on the detection range of the range sensor 11a. When the agricultural field sensor assembly 11 includes only one range sensor 11a, the detection range Q of the agricultural field sensor assembly 11 may be identical to the detection range of the range sensor 11a, or may be smaller than the detection range of the range sensor 11a.

When the agricultural field sensor assembly 11 includes a plurality of range sensors 11a, the plurality of range sensors 11a may be oriented toward respective target points on the ground surface Hs, or may be oriented toward the same target point on the ground surface Hs. Respective detection ranges of the plurality of range sensors 11a may define a plurality of detection ranges Q of the agricultural field sensor assembly 11. Alternatively, the entire detection range of the plurality of range sensors 11a, a partial range selected from the entire detection range, or a range in which the detection ranges of the plurality of range sensors 11a overlap each other may define the detection range Q of the agricultural field sensor assembly 11.

The detection range Q extends not only in a front-rear direction of the working vehicle 1 (in the left-right direction of FIG. 1A) with a predetermined dimension as illustrated in FIG. 1A, but also in the left-right direction (the vehicle-width direction perpendicular to the front-rear direction and the up-down direction) of the working vehicle 1 with a predetermined dimension. The detection range Q also extends in the optical-axis direction of the range sensor 11a and in the vertical direction (the up-down direction of the working vehicle 1).

In the example illustrated in FIG. 1A, the range sensor 11a is provided at each of positions located forward, sideward, and rearward of the working vehicle 1 and the working device 2, but the range sensor 11a may be provided at at least one of these positions. Specifically, the range sensor 11a may be provided in or on at least one of the working vehicle 1 or the working device 2 in a position and an orientation that enable detection of a portion of the ground surface Hs located rearward, sideward, and/or forward of the working vehicle 1 and the working device 2. The detection range Q of the agricultural field sensor assembly 11 may be located rearward, sideward, and/or forward of the working vehicle 1 and the working device 2.

The agricultural field sensor assembly 11 measures distances to a plurality of points-of-measurement on the ground surface Hs within the detection range Q using the range sensor 11a, generates primary point cloud data indicating three-dimensional positions (positions in a three-dimensional coordinate system) of the plurality of points-of- measurement including measured values of the distances, and outputs the primary point cloud data. Specifically, the agricultural field sensor assembly 11 includes a processor and an interface, and the processor generates the primary point cloud data and outputs the primary point cloud data to the in-vehicle network using the interface. Note that such a processor and an interface may be provided in the range sensor 11a, or may be provided in the agricultural field sensor assembly 11 separately from the range sensor 11a.

The information processor 12 (FIG. 2) defines a computer including a processor and a memory. The memory (internal memory) included in the information processor 12 includes a volatile memory and a nonvolatile memory. The information processor 12 receives the primary point cloud data outputted by the agricultural field sensor assembly 11, and stores the primary point cloud data in at least one of the internal memory or the storage device 13. As another example, the processor of the agricultural field sensor assembly 11 may store the primary point cloud data in the storage device 13, and the information processor 12 may receive (read) the primary point cloud data from the storage device 13. The storage device 13 includes a nonvolatile memory or a memory drive such as a solid state drive (SSD).

The information processor 12 calculates a plurality of characteristic values based on the measured values of the distances to the plurality of points-of-measurement included in the primary point cloud data. The information processor 12 calculates secondary point cloud data indicating three-dimensional positions of a plurality of points-of-reference including the plurality of characteristic values based on the primary point cloud data. The information processor 12 calculates an approximated curved surface based on the secondary point cloud data, and calculates depths (differences in height) of the plurality of points-of- measurement with respect to the approximated curved surface based on the approximated curved surface and the measured values of the distances. In this regard, the information processor 12 generates soil clod information relating to the soil clods on the ground surface Hs based on the depths of the plurality of points-of-measurement, and outputs the soil clod information. The soil clod information includes, for example, information relating to the size of the soil clods on the ground surface Hs.

The vehicle controller 14 defines an electronic control unit (ECU) or a computer including a processor and a memory. The memory (internal memory) included in the vehicle controller 14 includes a volatile memory and a nonvolatile memory. The vehicle controller 14 is a controller that controls the working vehicle 1 and the working device 2. Specifically, the vehicle controller 14 controls the driving of the components 4 to 9 (the prime mover 4, the traveling devices 5, the transmission 6, the braking device 7, the steering device 8, and the raising/lowering device 9) of the working vehicle 1 to control the travel of the working vehicle 1 and the work using the working device 2. The vehicle controller 14 receives soil clod information and controls at least one of the working vehicle 1 or the working device 2 based on the soil clod information.

The internal memory of the information processor 12 and the storage device 13 store various types of information, data, and software programs for analyzing the soil clods on the ground surface Hs of the agricultural field H. The internal memory of the vehicle controller 14 and the storage device 13 store various types of information, data, and software programs for controlling the components of the working vehicle 1. The information processor 12, the vehicle controller 14, and so forth store information as appropriate in the internal memory of the information processor 12, the internal memory of the vehicle controller 14, and the storage device 13.

The vehicle sensor assembly 15 includes a plurality of various sensors provided in or on the components of the working vehicle 1 and the working device 2. The information processor 12 and the vehicle controller 14 determine the operating states of the working vehicle 1 and the working device 2 based on output signals from the various sensors of the vehicle sensor assembly 15. The operating states of the working vehicle 1 determined by the information processor 12 and the vehicle controller 14 include the driving/stopping state of each of the components 4 to 9 of the working vehicle 1, the actuation position of each of the components 4 to 9, the traveling direction, the traveling speed, the acceleration, and the posture (pitch angle, roll angle, yaw angle, orientation, and azimuth) of the working vehicle 1 (vehicle body 3), and so forth. The operating states of the working vehicle 1 determined by the information processor 12 and the vehicle controller 14 also include the number of revolutions of the engine or the electric motor serving as the prime mover 4. The operating states of the working device 2 include the driving/stopping state of each of the components of the working device 2, the posture of the working device 2 (at least the raised/lowered position that is the position in the vertical direction), the contact pressure of the working plate 2h against the soil, and so forth.

The position detector 16 uses a satellite positioning system to measure the position (measured position information including latitude and longitude) of the working vehicle 1 on the earth. Specifically, the position detector 16 is provided in or on the vehicle body 3 and includes a GNSS receiver. The position detector 16 receives signals (positions of positioning satellites, transmission time, correction information, and so forth) transmitted from the positioning satellites using the GNSS receiver, and measures the position of the position detector 16 based on the received signals. In this regard, the position detector 16 may correct the position measured based on the signals received by the GNSS receiver based on a correction signal received from a base station, and may determine the corrected position as the position of the position detector 16.

The position detector 16 may include an inertial measurement unit (inertial sensor) such as a gyroscope sensor and/or an acceleration sensor. In this case, the position detector 16 may use the inertial measurement unit to correct the position measured based on the signals received from the positioning satellites, and may determine the corrected position as the position of the position detector 16. The information processor 12 and the vehicle controller 14 regard the position measured by the position detector 16 as the position of the working vehicle 1 (vehicle body 3). In other words, the position detector 16 measures the position of the working vehicle 1.

The installation position of the position detector 16 in or on the working vehicle 1 is defined as a reference position of the working vehicle 1. A relative position of the detection range Q of the agricultural field sensor assembly 11 with respect to the reference position is measured in advance and stored in the internal memory of the information processor 12 or the storage device 13. The information processor 12 calculates the position of the detection range Q on the earth as a measurement position of the primary point cloud data based on the relative position of the detection range Q and the position measured by the position detector 16.

The information processor 12 and the vehicle controller 14 may use the position detector 16 to detect the position of the vehicle body 3 at a predetermined cycle so as to detect (calculate) the traveling direction, the traveling speed, the acceleration, and the posture of the working vehicle 1 (vehicle body 3) based on time-series data of the position of the vehicle body 3. Alternatively, the information processor 12 and the vehicle controller 14 may detect the traveling direction, the traveling speed, the acceleration, and the posture of the working vehicle 1 from the measurement results of the inertial measurement units in the position detector 16.

The user interface 17 defines, for example, a touch screen or a tablet terminal device (computer) including a display. The user interface 17 is provided near the operator's seat 10s in the cabin 10. The information processor 12 and the vehicle controller 14 cause the user interface 17 to output (display) various types of information stored in at least one of the internal memory included in each of the information processor 12 and the vehicle controller 14 or the storage device 13. For example, the information processor 12 causes the user interface 17 to output (display) the above-described soil clod information. An operator or the like of the working vehicle 1 uses the user interface 17 to input various types of information. The user interface 17 includes an input device (input interface) and an output device (output interface).

The communication device 18 defines a communication interface including an antenna and a communication circuit for wirelessly communicating with external devices such as a management server 20 and a terminal device 30 outside the working vehicle 1. The communication device 18 includes an input device and an output device.

The soil clod analysis system 100 may include the management server 20 and the terminal device 30. FIG. 2 illustrates one working vehicle 1, one management server 20, and one terminal device 30. However, the number of working vehicles 1, the number of management servers 20, and the number of terminal devices 30 included in the soil clod analysis system 100 may each be one or two or more.

The management server 20 defines a server or a computer provided in a management center or a cloud system. The management server 20 includes a processor, a memory, a storage device having a larger capacity than the memory, and a communication device (communication interface) 23. A database 22 is built in the storage device of the management server 20. The database 22 stores various types of information relating to the working vehicle 1 and the agricultural field H. The management server 20 is configured to use the communication device 23 to communicate with the information processor 12, the vehicle controller 14, and the terminal device 30 via a wide-area network including, for example, a mobile phone communication network and the Internet.

The terminal device 30 defines a computer used by a user of the soil clod analysis system 100. The terminal device 30 includes a processor, a memory, a user interface 32, and a communication device (communication interface) 33. Various types of information can be inputted and outputted using the user interface 32. The terminal device 30 is configured to use the communication device 33 to communicate with the management server 20, the information processor 12, and the vehicle controller 14 via the wide-area network.

The information processor 12 and the vehicle controller 14 are configured to use the communication device 18 to communicate with the management server 20 and the terminal device 30 via the wide-area network. Alternatively or additionally, the information processor 12 and the vehicle controller 14 may be configured to use the communication device 18 to communicate with the management server 20 and the terminal device 30 via a narrow-area network such as a wireless LAN.

The storage device 13 of the working vehicle 1 stores work information, agricultural field information, work record information, driving information, and so forth. The work information includes information indicating at least one of a type of previous work in the agricultural field H, a type of next work in the agricultural field H, or a type of at least one crop to be grown. The agricultural field information includes information indicating an agricultural field map representing the agricultural field H. Additionally, the agricultural field information includes information relating to the agricultural field H, such as the position (position on the earth, coordinates) and the contour of the agricultural field H, and the positions of a work area and a headland in the agricultural field H. The work record information includes information indicating one or more worked positions, where ground work has been performed by the working vehicle 1 and the working device 2 coupled to the working vehicle 1, in the agricultural field H.

The driving information includes information indicating at least one of the traveling speed of the working vehicle 1 (vehicle body 3), the rotation speed of the working blades 2g in the working device 2, the position (work depth) of the working blades 2g in the vertical direction, or the contact pressure of the working plate 2h against the soil. For example, actual driving information regarding the working vehicle 1 when actually performing the ground work in the agricultural field H may be stored in the storage device 13. Alternatively or additionally, scheduled driving information regarding the working vehicle 1 scheduled to perform the ground work in the agricultural field H may be stored in the storage device 13.

The user may use the user interface 17 of the working vehicle 1 to input at least one of the work information, the agricultural field information, the work record information, or the driving information, and the inputted information may be stored in the storage device 13 by the information processor 12. Alternatively or additionally, the user may use the user interface 32 of the terminal device 20 to input at least one of the work information, the agricultural field information, the work record information, or the driving information. The input information may be transmitted by the communication device 33 and received by the communication device 18, and then the information processor 12 may store the input information in the storage device 13.

Alternatively or additionally, at least one of the work information, the agricultural field information, the work record information, or the driving information may be inputted using the user interface 32 and then transmitted by the communication device 33. The transmitted input information may be received by the communication device 23 of the management server 20 and then stored in the database 22. The information processor 12 of the working vehicle 1 may communicate with the management server 20 via the communication device 23, may receive at least one of the work information, the agricultural field information, the work record information, or the driving information, and may store the received information in the storage device 13.

At least one of the information processor 12 or the vehicle controller 14 may generate the work record information and the actual driving information based on the detection results of the vehicle sensor assembly 15 and the position detector 16 and may store the work record information and the actual driving information in the storage device 13.

The operation unit 19 includes a plurality of manual operators, a plurality of driving circuits, and a plurality of actuators to actuate the prime mover 4, the traveling devices 5, the transmission 6, the braking device 7, the steering device 8, and the raising/lowering device 9. The plurality of manual operators include a plurality of operation members (operation interfaces) such as levers, dials, pedals, keys, and switches operated by the operator of the working vehicle 1, and a plurality of sensors that detect at least one of whether an operation has been made, the operation direction, or the operation amount of the plurality of operation members.

The plurality of actuators of the operation unit 19 include hydraulic actuators including one or more hydraulic motors and/or one or more hydraulic cylinders. To actuate the plurality of hydraulic actuators, the operation unit 19 includes a hydraulic circuit (driving circuit) that includes one or more hydraulic pumps, one or more hydraulic motors, one or more hydraulic pilot operating valves, and one or more electromagnetic control valves.

At least one of the plurality of actuators of the operation unit 19 may be an electric actuator such as a servo motor or a servo cylinder. To actuate the electric actuator, the operation unit 19 may include an electric circuit (driving circuit), and the electric circuit may include a semiconductor element.

When the prime mover 4 is an engine, the operation unit 19 includes a fuel injection device, a throttle valve, and an electric actuator (such as an electric motor) that opens/closes the throttle valve. In this case, the vehicle controller 14 changes the number of revolutions of the engine by performing at least one of changing the injection amount of fuel to the engine using the fuel injection device and changing the opening of the throttle valve using the electric actuator.

When the prime mover 4 is an electric motor, the operation unit 19 includes an inverter that drives the electric motor, and so forth. In this case, the vehicle controller 14 changes the number of revolutions of the electric motor by changing the magnitude of the current to be supplied to the electric motor using the inverter.

The vehicle controller 14 actuates the plurality of actuators and so forth in the operation unit 19 to drive the prime mover 4, the traveling devices 5, the transmission 6, the braking device 7, the steering device 8, and the raising/lowering device 9, respectively. Then, the vehicle controller 14 controls the prime mover 4, the traveling devices 5, the transmission 6, the braking device 7, and the steering device 8 using the operation unit 19 to perform automatic operation for controlling traveling and stopping of the working vehicle 1, changing (adjusting) of the traveling speed, and steering, to cause the working vehicle 1 to automatically travel or autonomously travel.

Furthermore, the vehicle controller 14 controls the driving of at least one of the prime mover 4, the transmission 6, the PTO shaft 61, or the raising/lowering device 9 included in the working vehicle 1, or the auxiliary raising/lowering device 2a included in the working device 2, to change (adjust) the traveling speed of the working vehicle 1, the rotation speed of the working blades 2g of the working device 2, and the position (work depth) of the working blades 2g in the vertical direction.

Specifically, the vehicle controller 14 changes the traveling speed of the working vehicle 1 by controlling the driving of at least one of the prime mover 4 or the transmission 6 using the operation unit 19. In this regard, for example, the vehicle controller 14 changes the number of revolutions of the prime mover 4 using the operation unit 19 to change the traveling speed of the working vehicle 1. Additionally or alternatively, the vehicle controller 14 controls the speed-change operation of the transmission 6 by actuating at least one of an actuator, a driving circuit, or a valve for speed-change in the operation unit 19 to change the traveling speed of the working vehicle 1.

The vehicle controller 14 changes the rotation speed of the working blades 2g of the working device 2 via the PTO shaft 61 (FIG. 1) by controlling the driving of at least one of the prime mover 4 or the transmission 6 using the operation unit 19. Specifically, the transmission 6 includes a PTO transmission mechanism that transmits the power of the prime mover 4 to the PTO shaft 61 to change the rotation speed of the PTO shaft 61. The PTO transmission mechanism includes a PTO propeller shaft, a plurality of hydraulic clutches, and a plurality of gears. The operation unit 19 includes at least one of an actuator, a driving circuit, or a valve for PTO to actuate the PTO transmission mechanism. The vehicle controller 14 controls the speed-change operation of the PTO transmission mechanism by actuating at least one of the actuator, the driving circuit, or the valve for PTO to change the rotation speed of the working blades 2g of the working device 2 coupled to the PTO shaft 61.

The vehicle controller 14 changes the position of the working blades 2g of the working device 2 in the vertical direction by controlling the driving of the raising/lowering device 9. Specifically, the operation unit 19 includes at least one of a lift actuator, a driving circuit, or a valve to actuate the raising/lowering device 9. The lift actuator may be included in the raising/lowering device 9. The vehicle controller 14 controls the driving of the raising/lowering device 9 by actuating at least one of the lift actuator, the driving circuit, or the valve to change the position of the working blades 2g in the vertical direction.

Additionally or alternatively, the vehicle controller 14 changes the position of the working blades 2g in the vertical direction by controlling the driving of the auxiliary raising/lowering device 2a in the working device 2. Specifically, the working vehicle 1 includes a hydraulic pump that delivers hydraulic fluid, and a battery. The operation unit 19 includes at least one of an externally fluid-supplying circuit that supplies hydraulic fluid from the hydraulic pump to the outside or an externally power-supplying circuit that supplies electric power from the battery to the outside. The vehicle controller 14 controls the driving of the auxiliary lift actuator and the auxiliary raising/lowering device 2a by supplying the hydraulic fluid and/or the electric power to the auxiliary lift actuator included in the auxiliary raising/lowering device 2a by at least one of the externally fluid-supplying circuit or the externally power-supplying circuit to change the position of the working blades 2g in the vertical direction.

The vehicle controller 14 changes (adjusts) the contact pressure of the working plate 2h in the working device 2 against the soil by controlling the driving of the auxiliary adjustment actuator 2z included in the working device 2. Specifically, the vehicle controller 14 controls the driving of the auxiliary adjustment actuator 2z by supplying the hydraulic fluid and/or the electric power to the auxiliary adjustment actuator 2z using at least one of the externally fluid-supplying circuit or the externally power-supplying circuit of the operation unit 19 to change the contact pressure of the working plate 2h against the soil.

When the working device 2 includes an auxiliary actuator for rotation that rotationally drives the working blades 2g and so forth, the vehicle controller 14 changes (adjusts) the rotation speed of the working blades 2g by controlling the driving of the auxiliary actuator for rotation. Specifically, the vehicle controller 14 controls the driving of the auxiliary actuator for rotation by supplying the hydraulic fluid and/or the electric power to the auxiliary actuator for rotation using at least one of the externally fluid-supplying circuit or the externally power-supplying circuit of the operation unit 19 to change the rotation speed of the working blades 2g and so forth.

In the agricultural field H, the vehicle controller 14 receives the position of the working vehicle 1 measured by the position detector 16 and the agricultural field information stored in the storage device 13, and causes the working vehicle 1 to travel by automatic operation based on the position of the working vehicle 1 and the agricultural field information. Additionally, the vehicle controller 14 performs work using the working device 2 based on the position of the working vehicle 1 and the agricultural field information.

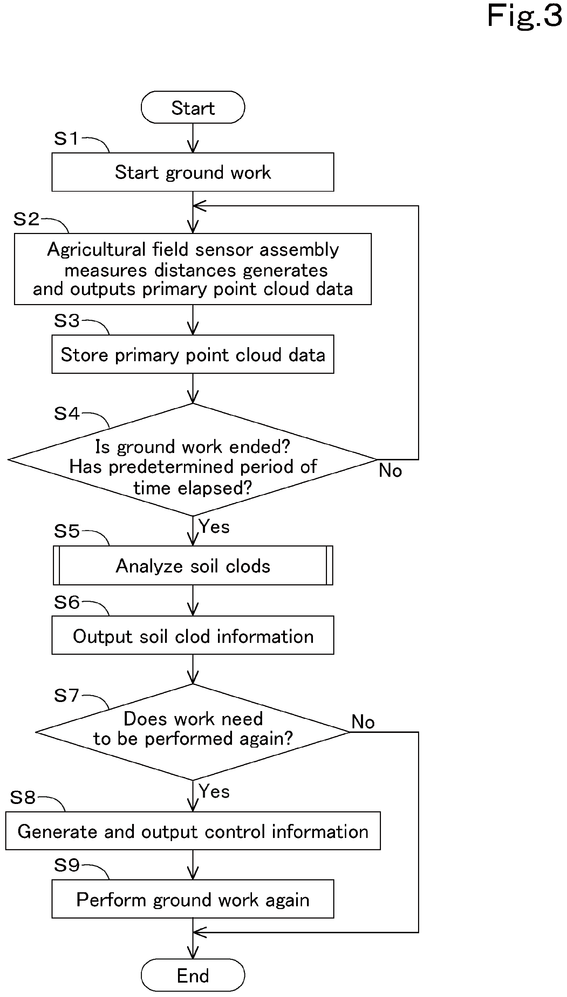

FIG. 3 is a flowchart presenting an example of an operation of the soil clod analysis system 100. The steps in FIG. 3 performed by the agricultural field sensor assembly 11, the information processor 12, or the vehicle controller 14 are performed according to a software program stored in the storage device 13 or the like (or the internal memory). The same applies to other flowcharts described later.

In an agricultural field H, the working vehicle 1 starts ground work including clod breaking such as cultivation using the working device 2 while traveling (traveling forward) by automatic operation or manual operation (S1). The agricultural field sensor assembly 11 measures distances to a plurality of points-of-measurement on a portion of a ground surface Hs captured within a detection range Q of the ground surface Hs after the ground work is performed, generates primary point cloud data indicating three-dimensional positions of the plurality of points-of-measurement including measured values of the distances, and outputs the primary point cloud data (S2).

Note that the information processor 12 or the vehicle controller 14 determines the travel state (traveling/stopping state) of the working vehicle 1 and the work state (whether ground work is performed) of the working device 2 from at least one of the detection result of the vehicle sensor assembly 15 or the actuation state of the operation unit 19, and controls the agricultural field sensor assembly 11 in association with the travel state and the work state.

The information processor 12 receives the primary point cloud data and stores the primary point cloud data in the storage device 13 (S3). At this time, the information processor 12 generates attribute information of the primary point cloud data, and stores the attribute information in the storage device 13 in association with the primary point cloud data. The attribute information of the primary point cloud data may include, for example, identification information of the agricultural field H where the primary point cloud data has been measured, measurement position information indicating the measurement position of the primary point cloud data, and time information (time stamp) indicating the time of the reception of the primary point cloud data.

Unless the working vehicle 1 performing the ground work using the working device 2 stops traveling for a predetermined period of time or more (S4: NO), the agricultural field sensor assembly 11 periodically performs a process from (i) measuring the distances to the plurality of points-of-measurement on the ground surface Hs within the detection range Q to (ii) outputting the primary point cloud data (S2), and the information processor 12 stores the primary point cloud data in the storage device 13 as needed (S3).

The agricultural field sensor assembly 11 and the detection range Q move following the travel of the working vehicle 1. Thus, by repeatedly performing steps S2 to S4, the ground surface Hs of the agricultural field H where the ground work has been performed by the working vehicle 1 and the working device 2 is detected by the agricultural field sensor assembly 11 in a state of being divided into a plurality of sections with the detection range Q defining one unit, and a plurality of pieces of primary point cloud data are generated by the agricultural field sensor assembly 11 and stored in the storage device 13.

When the working vehicle 1 stops traveling for the predetermined period of time or more (S4: YES), the ground work is ended, and the agricultural field sensor assembly 11 stops, for example, generating the primary point cloud data. Additionally, the information processor 12 associates at least one piece of primary point cloud data stored in the storage device 13 as a point cloud file from the start to the end of the ground work in the agricultural field H, and stores the associated data in a predetermined storage area of the storage device 13. At this time, the information processor 12 stores, in the storage device 13, time information (time stamp) indicating the time of the generation of the point cloud file in association with the point cloud file. Then, the information processor 12 performs, based on the primary point cloud data included in the point cloud file, a soil clod analysis process of analyzing soil clods on the ground surface Hs of the agricultural field H after the ground work (S5).

Alternatively or additionally, when the information processor 12 receives first primary point cloud data after the ground work is started, the information processor 12 may generate a point cloud file, associate the point cloud file with the first primary point cloud data, and store, in the storage device 13, the point cloud file and the first primary point cloud data in association with each other. Further, as the information processor 12 receives primary cloud data until the ground work is ended, the information processor 12 may associate the primary point cloud data with the point cloud file and store, in the storage device 13, the primary point cloud data in association with the point cloud file.

Alternatively or additionally, the information processor 12 may generate primary point cloud data of the detection range Q and attribute information of the primary point cloud data by mapping a plurality of points-of-measurement included in primary point cloud data outputted by the agricultural field sensor assembly 11 while estimating the position and the travel route of the working vehicle 1 through simultaneous localization and mapping (SLAM). At this time, the agricultural field sensor assembly 11 may measure distances to a plurality of points-of-measurement on the ground surface Hs and may output primary point cloud data at a cycle shorter than the period of time taken for the working vehicle 1 to travel by the distance corresponding to the detection range Q, and the information processor 12 may combine a plurality of pieces of primary point cloud data to generate primary point cloud data of the detection range Q. Accordingly, even when the range sensor 11a having a low resolution is used, the point cloud included in the primary point cloud data of the detection range Q can be increased in density.

Alternatively or additionally, each time the information processor 12 receives primary point cloud data from the agricultural field sensor assembly 11, the information processor 12 may perform the soil clod analysis process in real time based on the primary point cloud data. Further, the ground surface Hs located forward or sideward of the working vehicle 1 and the working device 2 before the ground work is started may define the detection range Q for the agricultural field sensor assembly 11 to generate primary point cloud data before the ground work. In this case, based on the primary point cloud data before the ground work, the information processor 12 may perform the soil clod analysis process, or may change at least one of the traveling vehicle speed of the working vehicle 1, the rotation speed of the PTO shaft 61 or the working blades 2g, the contact pressure of the working plate 2h, or the like.

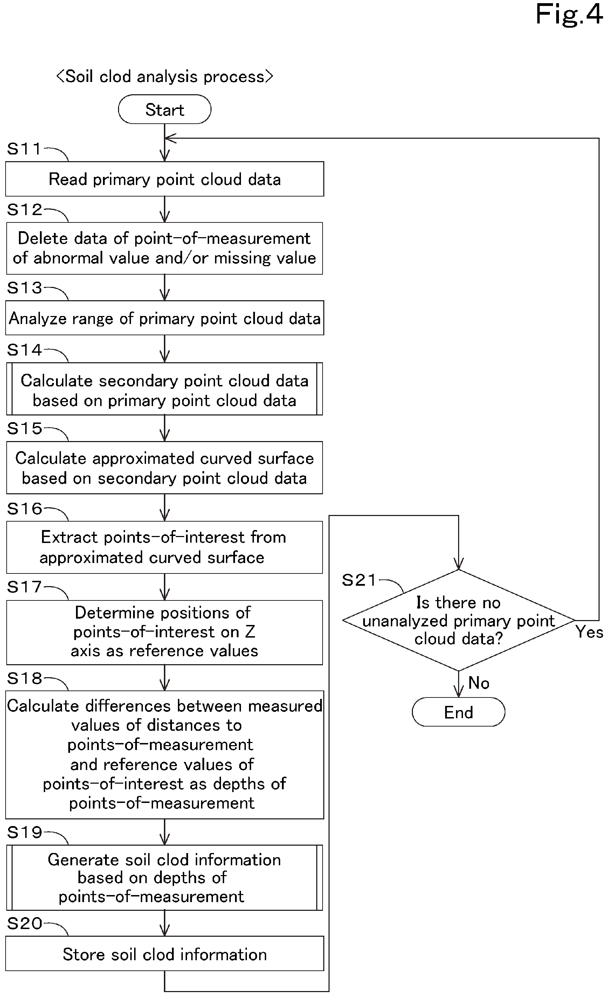

FIG. 4 is a flowchart presenting an example of details of the soil clod analysis process in step S5 in FIG. 3. The information processor 12 reads one piece of primary point cloud data from one point cloud file stored in the storage device 13 (S11). At this time, the information processor 12 reads (receives), for example, one piece of primary point cloud data in the order of earlier time indicated by the associated time information among at least one piece of primary point cloud data included in the latest point cloud file. As another example, the information processor 12 may read one piece of primary point cloud data from one point cloud file designated by the user using the user interface 17.

The information processor 12 performs a point cloud process on the read primary point cloud data to analyze the soil clods. In the point cloud process, the information processor 12 first deletes position data of one or more points-of-measurement each indicating at least one of an abnormal value or a missing value from the primary point cloud data (S12). Next, the information processor 12 analyzes the range of the primary point cloud data (S13). At this time, the information processor 12 may define a region of interest from the primary point cloud data, and may exclude position data of a plurality of points-of-measurement existing outside the region of interest from the primary point cloud data. The point cloud process in steps S12 and S 13 described above is also referred to as a filtering process.

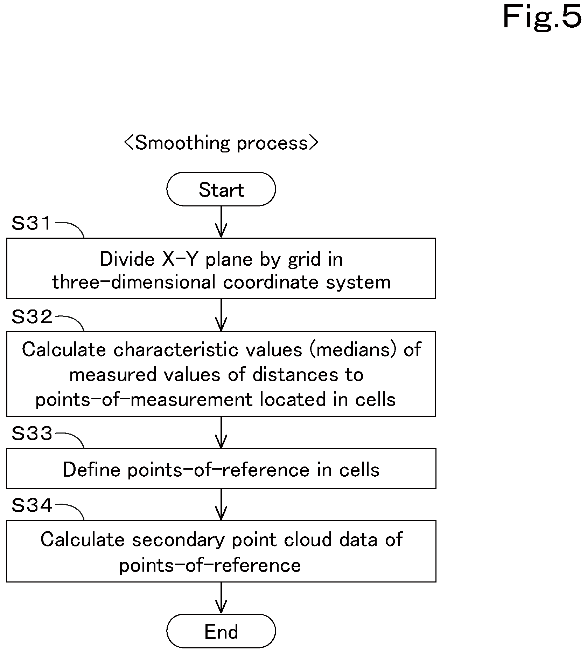

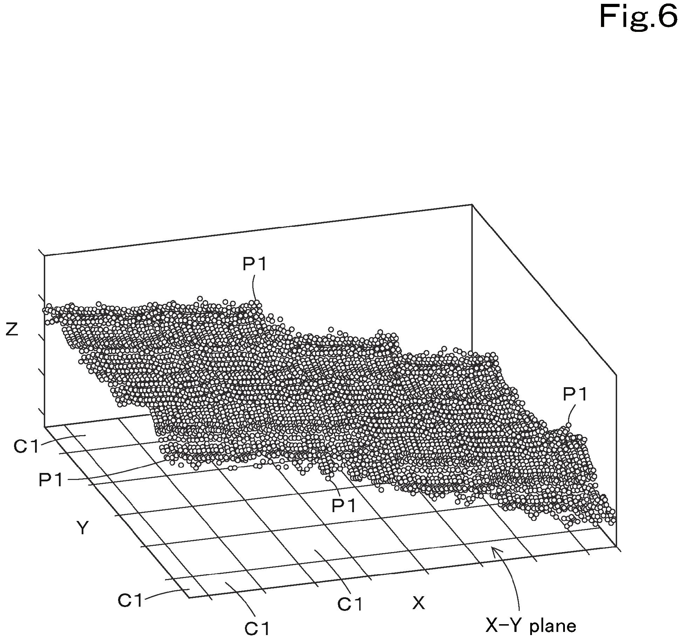

Next, the information processor 12 calculates secondary point cloud data based on the primary point cloud data (S14). FIG. 5 is a flowchart presenting an example of details of a secondary point cloud data calculation process in step S14 in FIG. 4. FIG. 6 is a diagram illustrating an example of a three-dimensional coordinate system indicating primary point cloud data. The three-dimensional coordinate system illustrated in FIG. 6 includes a Z axis indicating measured values of distances to a plurality of points-of- measurement P1 included in the primary point cloud data, and an X axis and a Y axis indicating other positions of the plurality of points-of-measurement P1. The X axis, the Y axis, and the Z axis are perpendicular to each other. The same applies to the three-dimensional coordinate systems in other drawings described later. Note that, in FIG. 6, some points-of-measurement P1 included in the primary point cloud data are indicated by white circles or one-dot chain lines. Additionally, many points-of-measurement P1 are present inside the plurality of points-of-measurement P1 illustrated in a frame shape.

In the three-dimensional coordinate system illustrated in FIG. 6, the information processor 12 divides the X-Y plane by a grid with a predetermined mesh size to define a plurality of cells (squares) C1 on the X-Y plane, the X-Y plane being perpendicular to the Z axis (S31 in FIG. 5). At this time, the information processor 12 divides the X-Y plane by a grid with squares wider than the intervals of the plurality of points-of-measurement P1 in the X direction and the Y direction to define the plurality of cells C1.

Specifically, the agricultural field sensor assembly 11 can measure distances, for example, to a plurality of preliminary points-of-measurement defined at 1-mm intervals in the X direction and the Y direction using the range sensor 11a. In other words, when the X-Y plane is represented by a digital image, the agricultural field sensor assembly 11 can measure distances to a plurality of preliminary points-of-measurement corresponding to 1-mm-square pixels using the range sensor 11a. Then, a plurality of points-of-measurement are defined at intervals of N mm (for example, 2 to 10 mm) (every 2 to 10 pixels) in the X direction and the Y direction, and the agricultural field sensor assembly 11 measures distances to the plurality of points-of-measurement using the range sensor 11a and outputs primary point cloud data indicating three-dimensional positions of the plurality of points-of-measurement. The information processor 12 divides the X-Y plane into, for example, a lattice form (division by a grid) with a spacing of M mm (for example, 20 to 100 mm) (every 20 to 100 pixels) larger than N in the X direction and the Y direction, and defines the divided areas as cells.

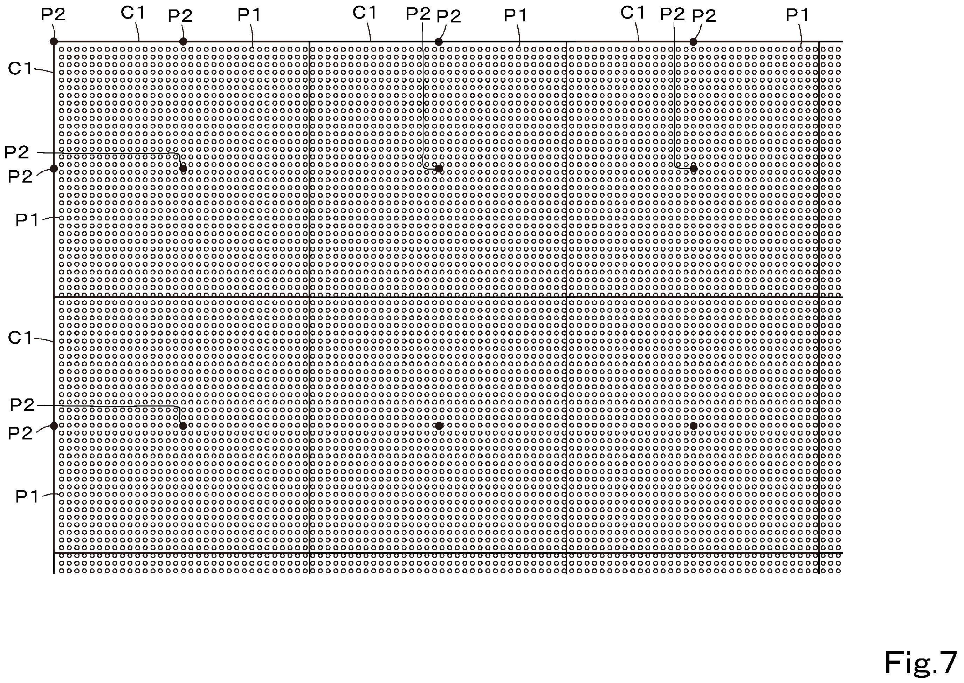

As described above, as illustrated in FIGS. 6 and 7, the plurality of points-of-measurement P1 are located directly above and/or directly below the cells C1 on the X-Y plane. FIG. 7 is a plan view illustrating an example of the cells C1 defined on the X-Y plane. In the example embodiment illustrated in FIGS. 6 and 7, the plurality of points-of-measurement P1 are defined at intervals of 3 mm in the X direction and the Y direction, and a plurality of 100-mm-square cells C1 are defined on the X-Y plane.

As another example, the agricultural field sensor assembly 11 may measure distances to all preliminary points-of-measurement using the range sensor 11a, and may output primary point cloud data indicating three-dimensional positions of the plurality of preliminary points-of-measurement. Then, the information processor 12 may select a plurality of preliminary points-of-measurement at intervals of N mm (N pixels) in the X direction and the Y direction from the primary point cloud data, and may use only data of the selected preliminary points-of-measurement.

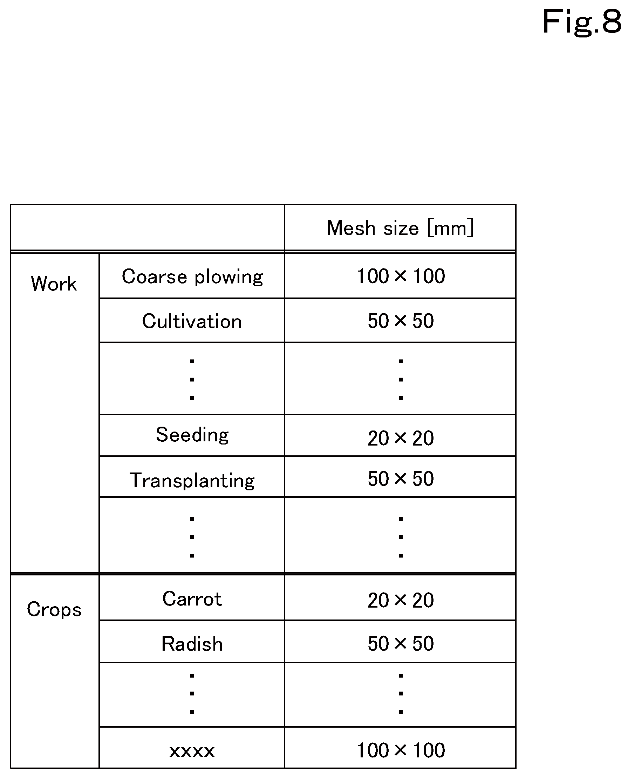

The information processor 12 may read (receive) work information indicating at least one of a type of previous work in the agricultural field H, a type of next work in the agricultural field H, or a type of at least one crop to be grown from the storage device 13 or the like (or the internal memory of the information processor 12), and may determine the mesh size for dividing the X-Y plane based on the work information. For example, mesh information as presented in FIG. 8 is stored in the storage device 13. The mesh information in FIG. 8 indicates, in a table format, a correlation between the type of work that is performed in the agricultural field H and the mesh size, and a correlation between the type of at least one crop to be grown in the agricultural field H and the mesh size.

The information processor 12 specifies at least one of the type of previous work, the type of next work, or the type of at least one crop to be grown from the work information, and specifies the mesh size (the mesh dimension in the X direction and the Y direction) corresponding to the type from the mesh information stored in the storage device 13. Then, the information processor 12 divides the X-Y plane by the grid with the specified mesh size (S31 in FIG. 5). Note that the information processor 12 may receive the work information from the database 22 or the user interface 32 using the communication device 18.

Next, the information processor 12 extracts a plurality of points-of-measurement P1 located directly above and/or directly below the cells C1, and calculates characteristic values corresponding to the cells C1 based on measured values (positions on the Z axis) of the distances to the plurality of points-of- measurement P1 (S32). At this time, the information processor 12, based on the primary point cloud data, extracts a plurality of points-of-measurement P1 located directly above and/or directly below a corresponding cell C1, and calculates, as each of the characteristic values, a median of measured values of distances to the plurality of points-of- measurement P1. Note that, in the example in FIG. 7, 1089 (33 in the X and Y directions, 33×33 = 1089) or 1156 (34 in the X and Y directions, 34×34 = 1156) points-of-measurement P1 are illustrated at equal intervals in the X and Y directions in each cell C1, but this is the theoretical number of points-of-measurement P1 corresponding to the number of pixels. In practice, due to the influence of the unevenness and inclination of the ground surface Hs and the soil clods, about 1000 to 1150 points-of-measurement P1 are present at substantially equal intervals in each cell C1, and there are also points-of-measurement P1 present at unequal intervals.

Next, the information processor 12 defines, directly above or directly below the cells C1, points-of-reference P2 in which corresponding characteristic values are defined as positions on the Z axis (S33 in FIG. 5). At this time, as illustrated in FIG. 7, the information processor 12 defines at least one point-of-reference P2 (black circle) directly above or directly below at least one of the inside or the boundary of each cell C1. More specifically, the information processor 12 defines the point-of-reference P2 directly above or directly below the center of each cell C1. Additionally, the information processor 12 defines, for a plurality of cells C1 at the outermost periphery, points-of-reference P2 directly above or directly below the boundaries and the vertexes not shared with another cell C1.

Then, the information processor 12 calculates secondary point cloud data indicating three-dimensional positions of the plurality of points-of- reference P2 defined in the cells C1 (S34 in FIG. 5). In this manner, the information processor 12 calculates the plurality of characteristic values based on the measured values of the distances to the plurality of points-of-measurement P1 included in the primary point cloud data, and calculates the secondary point cloud data indicating the three-dimensional positions of the plurality of points-of-reference P2 including the plurality of characteristic values based on the primary point cloud data.

In the above-described example, the example has been described in which the information processor 12 calculates, as each of the characteristic values (the positions of the points-of-reference P2 on the Z axis), the median of the measured values of the distances to the plurality of points-of- measurement P1 located directly above and/or directly below the corresponding cell C1, but this does not imply any limitation. Alternatively or additionally, for example, the information processor 12 may calculate, as each of the characteristic values, a mean of the measured values of the distances to the plurality of points-of-measurement P1 located directly above and/or directly below the corresponding cell C1.

Next, the information processor 12 calculates an approximated curved surface based on the secondary point cloud data (S15 in FIG. 4). At this time, the information processor 12 calculates an approximated curved surface that approximates a variation in the positions on the Z axis of the plurality of points-of-reference P2 included in the secondary point cloud data. In other words, the information processor 12 generates an approximated curved surface of the secondary point cloud data that is irregularly uneven, which is neither a plane nor a slope surface inclined at a certain angle. The approximated curved surface is a curved surface that averagely approximates the gentle undulations of the ground surface Hs, and may be referred to as an "average approximated curved surface". Furthermore, the approximated curved surface is a virtual reference curved surface (a curved surface with a height of zero) with the influence of the undulations and the inclinations of the ground surface Hs eliminated or reduced.

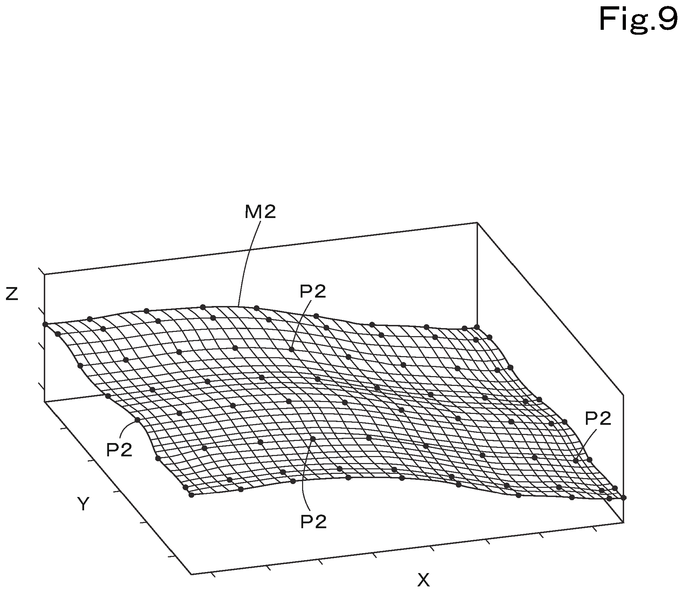

The information processor 12 calculates an approximated curved surface M2, for example, as indicated by a two-dot chain line in FIG. 9 by applying cubic spline interpolation to the secondary point cloud data. Accordingly, an approximated curved surface M2 passing through all of the plurality of points-of-reference P2 (black circles in FIG. 9) indicated by the secondary point cloud data is generated. In this regard, the points-of-reference P2 are defined not only directly above or directly below the centers of the cells C1 but also directly above or directly below the boundaries and the vertices of the cells C1 on the outermost periphery, so that the approximated curved surface M2 is located directly above or directly below all the points-of-measurement P1.

In FIG. 9, the three-dimensional model of the approximated curved surface M2 is illustrated in a mesh form having squares. The vertices of the squares of the approximated curved surface M2 are the plurality of points-of-reference P2 indicated by the secondary point cloud data. The approximated curved surface M2 is a curved surface like sheeting for bed (or a fishing net) spread over the ground surface Hs from above.

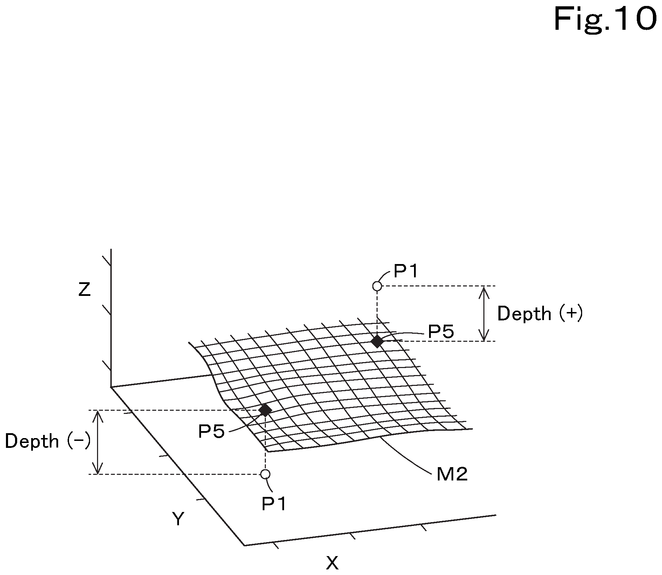

FIG. 10 is a diagram illustrating an example of an approximated curved surface M2 and points-of-measurement P1 included in primary point cloud data. Specifically, FIG. 10 is an enlarged view of a portion of the approximated curved surface M2 illustrated in FIG. 9 and points-of-measurement P1 located near the portion. In the three-dimensional coordinate system illustrated in FIG. 10 and other drawings (FIGS. 6 and 9), the information processor 12 extracts, from the approximated curved surface M2, a plurality of points-of-interest (black rhombuses) P5 located at the same positions in the X-Y plane as the respective corresponding points-of-measurement P1 (S16 in FIG. 4). While two points-of-measurement P1 and two points-of-interest P5 are illustrated in FIG. 10, there are many points-of-measurement P1 and many points-of-interest P5.

Next, the information processor 12 determines the positions of the plurality of points-of-interest P5 on the Z axis as reference values (S17 in FIG. 4). Then, the information processor 12 calculates, as each of the depths of the plurality of points-of-measurement P1 with respect to the approximated curved surface M2, a difference between (i) a corresponding one of the measured values of the distances to the plurality of points-of-measurement P1 and (ii) a corresponding one of the reference values of the plurality of points-of-interest P5 corresponding to the respective plurality of points-of-measurement P1 (S18). At this time, the information processor 12 may calculate a plurality of differences by subtracting reference depths of the corresponding plurality of points-of- interest P5 from the respective measured values of the distances to the plurality of points-of- measurement P1, and may determine the plurality of differences as the depths of the plurality of points-of-measurement P1. Accordingly, the depth of the point-of-measurement P1 located above the approximated curved surface M2 has a plus (+) value, and the depth of the point-of-measurement P1 located below the approximated curved surface M2 has a minus (-) value (see FIG. 10).

As described above, the information processor 12 calculates the depths (differences) of the plurality of points-of-measurement P1 with respect to the approximated curved surface M2 based on the approximated curved surface M2 and the measured values of the distances to the plurality of points-of-measurement P1 included in the primary point cloud data in steps S16 to S18 in FIG. 4. In other words, the information processor 12 corrects the measured values of the distances to the plurality of points-of-measurement P1 with reference to the approximated curved surface M2 to calculate the depths of the plurality of points-of-measurement P1.

As another example, the information processor 12 may determine, as each of the depths of the points-of-measurements P1, a value calculated by multiplying, by a coefficient, a difference between (i) a corresponding one of the measured values of the distances to the plurality of points-of-measurement P1 and (ii) a corresponding one of the reference values of the corresponding plurality of points-of- interest P5. In other words, the information processor 12 may calculate the depths of the plurality of points-of- measurement P1 based on a plurality of differences.

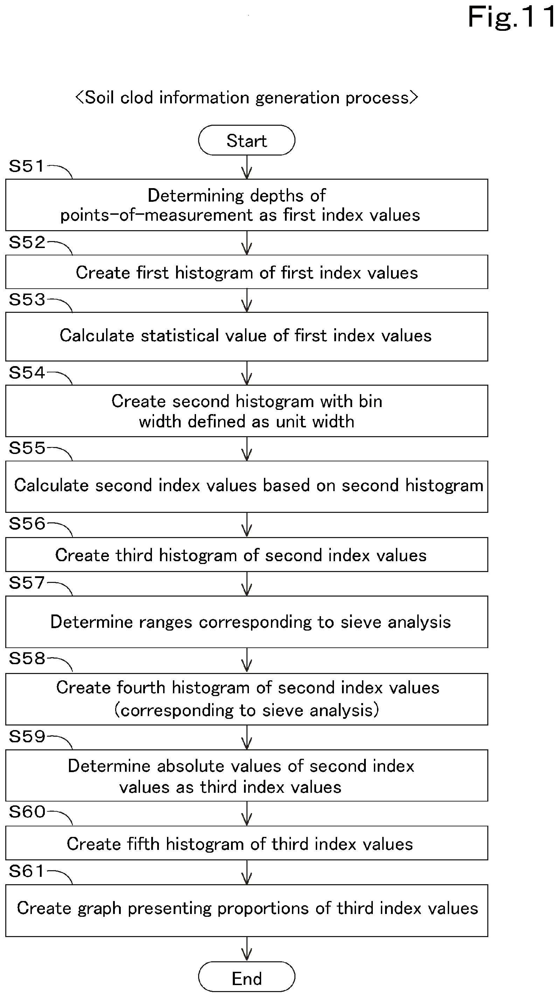

Next, the information processor 12 performs a soil clod information generation process (S19). FIG. 11 is a flowchart presenting an example of details of the soil clod information generation process. The soil clod information generation process is a process in which the information processor 12 generates soil clod information relating to the soil clods on the ground surface Hs based on the depths of the plurality of points-of- measurement P1. First, the information processor 12 determines the depths of the plurality of points-of-measurement P1 to be a plurality of first index values indicating the size of the soil clods on the ground surface Hs of the agricultural field H (S51). Next, the information processor 12 classifies each of the plurality of first index values into one of a plurality of predetermined first ranges, and creates a first histogram (graph) indicating a distribution of the plurality of first index values with respect to the plurality of first ranges (S52).

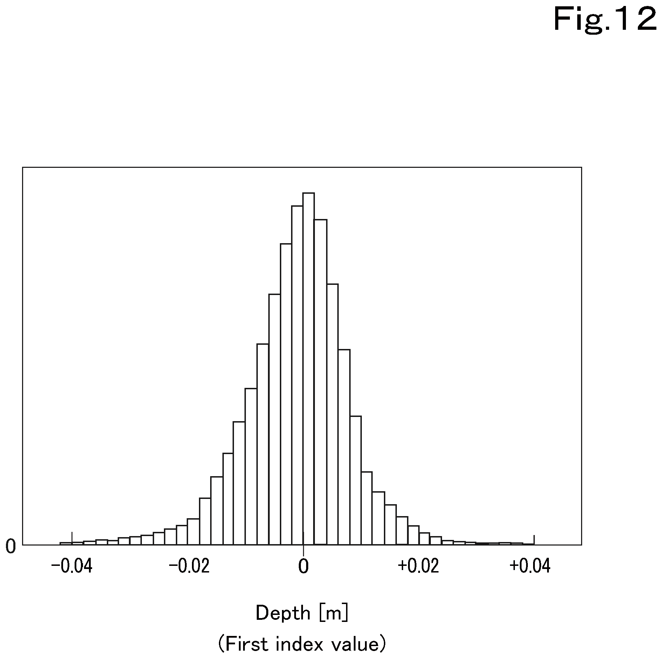

FIG. 12 is a diagram presenting an example of a first histogram. The plurality of first ranges, which are ranges of a plurality of bins of the first histogram, include a plurality of plus (+) side ranges where values increase stepwise from the zero (0) value and a plurality of minus (-) side ranges where values decrease stepwise from the zero value. The first histogram indicates a distribution of the depths of the plurality of points-of-measurement P1. In other words, the first histogram indicates a distribution of protrusions (raised portions) and recesses (depressed portions) of the ground surface Hs generated due to the soil clods. The first histogram presented in FIG. 12 indicates a substantially normal distribution.

The plurality of first ranges are defined in advance and stored in the storage device 13 or the like (or may be stored in the internal memory of the information processor 12). However, the user may change the plurality of first ranges using the user interface 17 or the like. Specifically, when the user inputs a change value of the plurality of first ranges or the bin widths of the first histogram using the user interface 17 or the like, the information processor 12 stores the inputted change value in the storage device 13. Then, when the information processor 12 creates a first histogram next time, the information processor 12 changes the plurality of first ranges based on the change value stored in the storage device 13, classifies each of the depths of the plurality of points-of-measurement P1 into one of the plurality of changed first ranges, and creates the first histogram.

Next, the information processor 12 calculates a statistical value of the plurality of first index values (S53 in FIG. 11). At this time, the information processor 12 calculates at least one statistical value including at least one of a standard deviation, a variance, a skewness, or a kurtosis of the plurality of first index values based on the plurality of first index values or the first histogram. Alternatively or additionally, the information processor 12 may calculate at least one of a mean, a median, or a mode of the plurality of first index values as the statistical value. These statistical values are index values for the soil clods.

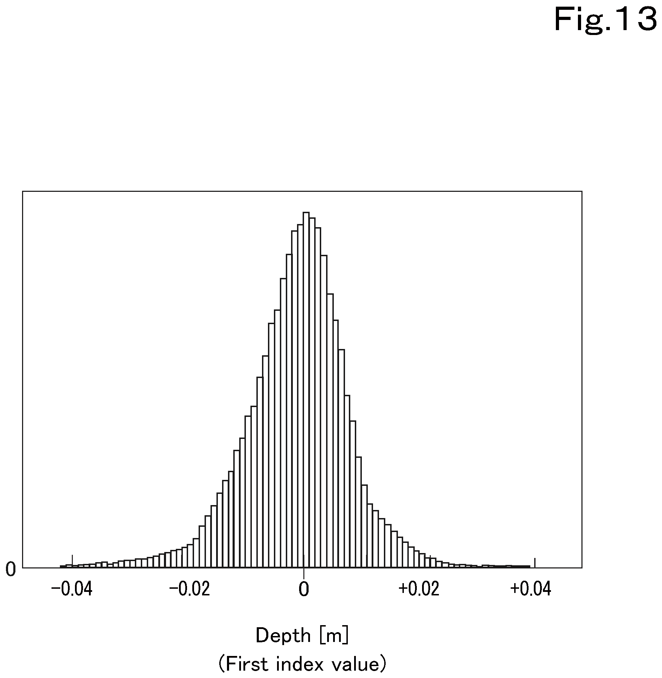

Next, the information processor 12 creates a second histogram of the plurality of first index values with a bin width defined as a predetermined unit width (S54). Specifically, the information processor 12 classifies each of the depths of the plurality of points-of-measurement P1 into one of a plurality of second ranges where the values increase/decrease stepwise by a unit width, and creates a second histogram indicating a distribution of the depths of the plurality of points-of-measurement P1 with respect to the plurality of second ranges. The unit width is, for example, 1 mm. The information processor 12 includes the depth of "0" in the plurality of second ranges. FIG. 13 is a diagram presenting an example of a second histogram.

Next, the information processor 12 calculates a plurality of second index values based on the second histogram (S55 in FIG. 11). At this time, the information processor 12 calculates each of the plurality of second index values by multiplying the count value of each bin of the second histogram in FIG. 13 by the absolute value of the edge value of the bin. The count value of each bin is the frequency of each bin indicated by the vertical axis in FIG. 13, and is also the number of depths (the number of pieces of data) included in each bin, in other words, the number of points-of-measurement P1 corresponding to the depths included in each bin. The edge value of each bin is at least one of the depth of the left edge or the depth of the right edge of each bin indicated by the horizontal axis in FIG. 13, and is also at least one of the maximum value or the minimum value of the range of each bin.

For example, in the second histogram in FIG. 13, in the bin having the maximum frequency of "5900", the range of the depths is "0 or more and +0.001 or less". Thus, the information processor 12 multiplies the frequency of "5900" by the absolute value of at least one of the minimum value of "0" or the maximum value of "+0.001" of the range as the edge value to determine a second index value of at least one of "0" or "5.9". In the present embodiment, the information processor 12 does not use "0" as the edge value, and determines the second index value to be a value other than "0". In contrast, in the bin in which the range is "less than 0 and -0.001 or less", the frequency is "5500", and thus the information processor 12 multiplies the frequency of "5500" by the absolute value of at least one of the minimum value of "-0.001" or the maximum value of "-0.0001" of the range as the edge value to determine a second index value of at least one of "5.5" or "0.55". Note that, when the edge value is rounded to the third decimal place, the maximum value is "-0.000", and thus the information processor 12 multiplies the frequency of "5500" by only the absolute value of the minimum value of "-0.001" of the range as the edge value to determine the second index value of "5.5".

As described above, the plurality of points-of- measurement P1 correspond to the plurality of pixels of the digital image representing the X-Y plane. Thus, the count value of each bin of the second histogram corresponding to the number of pixels, in other words, the number of points-of- measurement P1 (the number of pixels) included in each bin may be regarded as the area occupied by the soil clods on the ground surface Hs. Then, the plurality of second index values calculated by multiplying the count value of each bin by the absolute value of the edge value may be regarded as the volume of the soil clods. In this case, the information processor 12 calculates volume index values (second index values) for the soil clods based on the depths (the first index values of the soil clods) of the plurality of points-of-measurement P1 as described above.

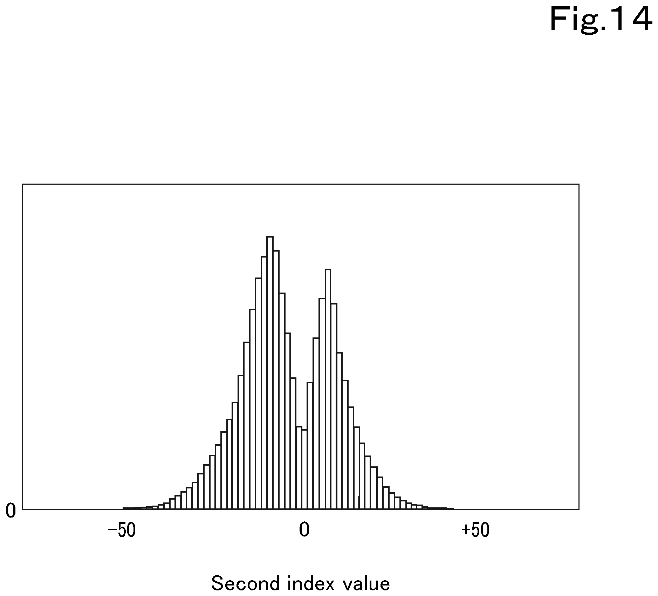

Next, the information processor 12 classifies each of the plurality of second index values into one of a plurality of predetermined third ranges, and creates a third histogram indicating a distribution of the plurality of second index values with respect to the plurality of third ranges (S56 in FIG. 11). FIG. 14 is a diagram presenting an example of a third histogram. The third histogram presented in FIG. 14 has two peaks.

Next, the information processor 12 determines a plurality of fourth ranges for classifying each of the second index values such that the plurality of fourth ranges correspond to respective sieve mesh sizes of a plurality of types of sieves for use in a sieve analysis in the agricultural field H (S57 in FIG. 11). At this time, the information processor 12 may determine a plurality of fourth ranges based on the (received) work information read from the storage device 13 or the like.

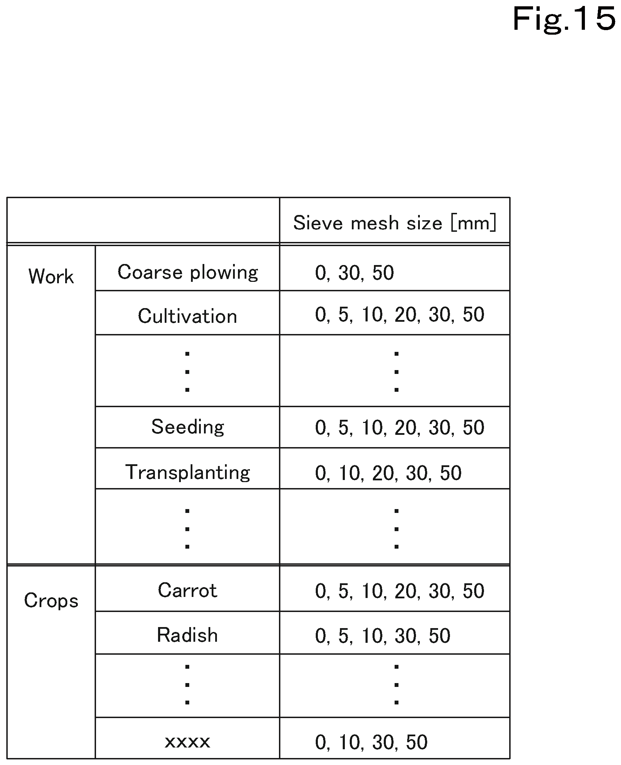

Specifically, for example, sieve information as presented in FIG. 15 is stored in the storage device 13. The sieve information in FIG. 15 presents, in a table format, a correlation between the type of work that is performed in the agricultural field H and the sieve mesh sizes of the plurality of types of sieves for use in the sieve analysis performed at least before or after the work. Additionally, the sieve information in FIG. 15 indicates, in a table format, a correlation between the type of at least one crop and the sieve mesh sizes of the plurality of types of sieves for use in the sieve analysis performed before seeds of the crop are sown in the agricultural field H. The information processor 12 specifies at least one of the type of previous work, the type of next work, or the type of at least one crop to be grown from the work information, specifies respective sieve mesh sizes of the plurality of types of sieves corresponding to the type of crop from the sieve information, and determines the plurality of fourth ranges corresponding to the specified respective sieve mesh sizes of the plurality of types of sieves.

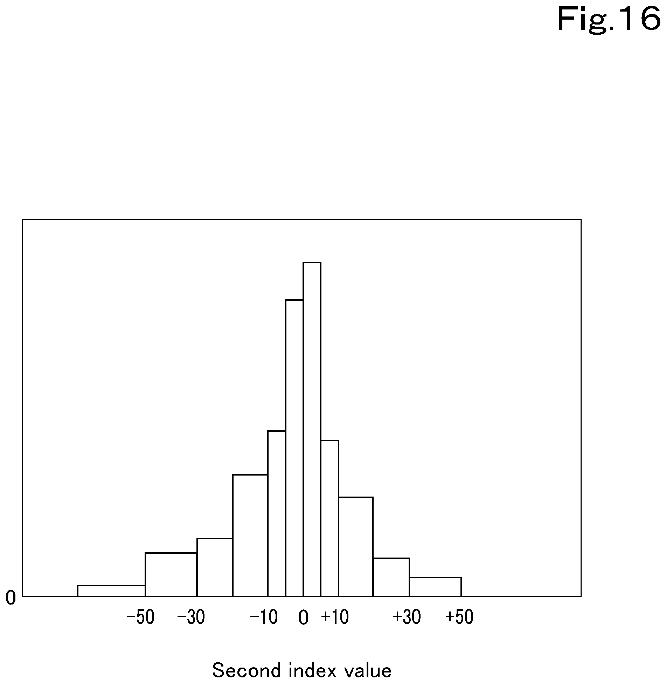

Then, the information processor 12 classifies each of the plurality of second index values into one of the plurality of predetermined fourth ranges, and creates a fourth histogram indicating a distribution of the plurality of second index values with respect to the plurality of fourth ranges (S58 in FIG. 11). In other words, the information processor 12 creates a fourth histogram corresponding to the sieve analysis. FIG. 16 is a diagram presenting an example of a fourth histogram. In this example, the sieve mesh sizes (unit [mm]) of the plurality of types of sieves are defined in five levels of 5, 10, 20, 30, and 50. Thus, a plurality of fourth ranges R4 are defined in 12 levels of 0 ≤ R4 < +5, +5 ≤ R4 < +10, +10 ≤ R4 < +20, +20 ≤ R4 < +30, +30 ≤ R4 < +50, +50 ≤ R4, 0 > R4 > -5, -5 ≥ R4 > -10, -10 ≥ R4 > -20, -20 ≥ R4 > -30, -30 ≥ R4 > -50, and -50 ≥ R4. In the example presented in FIG. 16, there is no second index value of +50 mm or more and there is a second index value included in each of other ranges of 11 levels, so that the count values of 11 bins are presented.

Next, the information processor 12 determines the absolute values of the plurality of second index values as a plurality of third index values (S59 in FIG. 11). Then, the information processor 12 integrates the ranges having the same absolute values of the edges among the plurality of fourth ranges to determine a plurality of fifth ranges, and creates a fifth histogram indicating a distribution of the plurality of third index values with respect to the plurality of fifth ranges (S60). Accordingly, a plurality of protrusions (raised portions) and a plurality of recesses (depressed portions) generated on the ground surface Hs are regarded as corresponding to the soil clods, respectively, and a distribution of the sizes of the soil clods is indicated by the fifth histogram.

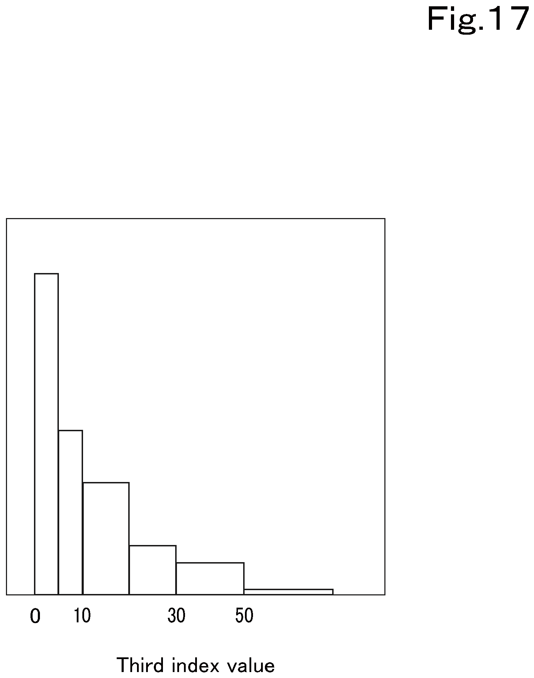

FIG. 17 is a diagram presenting an example of a fifth histogram. In FIG. 17, a plurality of fifth ranges R5 are defined in six levels of 0 ≤ R5 < 5, 5 ≤ R5 < 10, 10 ≤ R5 < 20, 20 ≤ R5 < 30, 30 ≤ R5 < 50, and 50 ≤ R5. The fifth histogram illustrates a distribution of the sizes of the soil clods, similarly to the sieve analysis. Since the plurality of third index values are the absolute values of the second index values that are converted into the volumes, the fifth histogram indicating the distribution of the plurality of third index values indicates a distribution of the volumes of the soil clods.

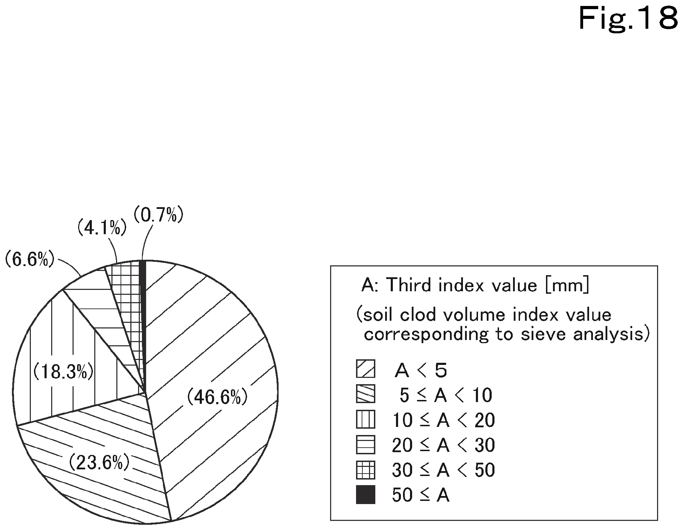

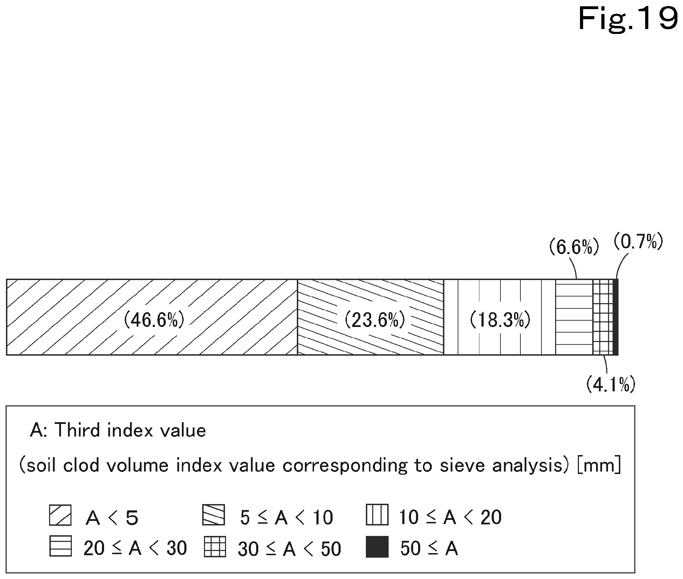

The information processor 12 creates a graph indicating proportions (ratio, %) of the plurality of third index values with respect to the plurality of fifth ranges (S61 in FIG. 11). In other words, the information processor 12 creates a graph indicating the proportions of the third index values included in the plurality of fifth ranges. At this time, the information processor 12 may create at least one of a pie chart or a bar chart. FIG. 18 is an example of a pie chart presenting the proportions of the third index values. FIG. 19 is an example of a bar chart presenting the proportions of the third index values. As presented in FIGS. 18 and 19, the pie chart and the bar chart created by the information processor 12 indicate the ratio (proportion) of the number of the third index values included in each of the plurality of fifth ranges to the total number of the plurality of third index values. Additionally, the pie chart and the bar chart present the proportions of the sizes (volumes) of the soil clods, similarly to the sieve analysis. In other words, the graphs presented in FIGS. 18 and 19 present the proportions of the volume index values for the soil clods.

As described above, the information processor 12 determines the depths of the plurality of points-of-measurement P1 and the calculated values calculated based on the depths of the plurality of points-of- measurement P1 as the plurality of index values (first to third index values) for the soil clods. Then, the information processor 12 generates the soil clod information relating to the size of the soil clods, such as the plurality of index values (first to third index values), the first to fifth histograms indicating the distributions of the plurality of index values, the statistical value of the plurality of index values, and the pie chart presenting the proportions of the plurality of index values.

The above-described soil clod information is an example, and this does not imply any limitation. The information processor 12 may generate soil clod information indicating at least one of an index value, a graph, data, a diagram, or the like relating to the soil clods other than the above-described soil clod information. In this regard, the information processor 12 may determine the depths of the plurality of points-of- measurement P1 or the calculated values calculated based on the depths as a plurality of index values for the soil clods, and may generate soil clod information indicating at least one of a distribution or proportions of the plurality of index values. Further, the information processor 12 may calculate a statistical value of the plurality of index values as the soil clod information.

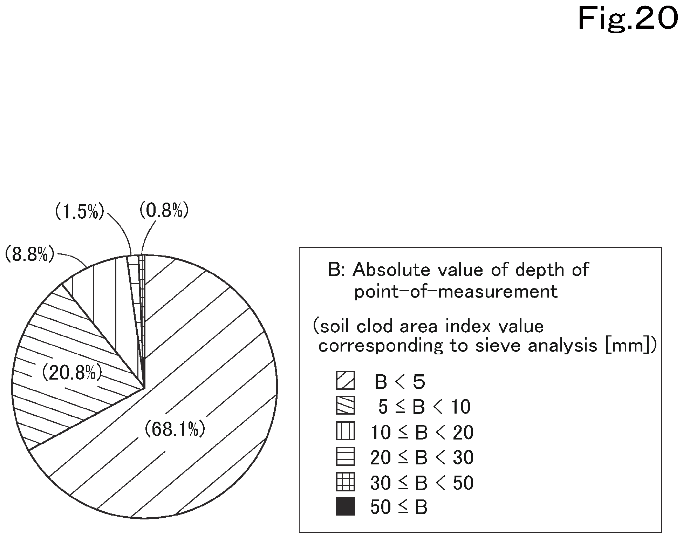

For example, the information processor 12 may determine the absolute values of the depths of the plurality of points-of-measurement P1 as area index values for the soil clods. Then, the information processor 12 may classify each of the plurality of area index values into one of the plurality of fifth ranges corresponding to the sieve analysis described above, and may generate, as the soil clod information, at least one of a histogram indicating a distribution of the plurality of area index values with respect to the plurality of fifth ranges, or a pie chart or a bar chart presenting proportions of the plurality of area index values. The pie chart and the bar chart generated in this manner indicate the proportions of the sizes (areas) of the soil clods. FIG. 20 is an example of a pie chart presenting proportions of the absolute values of depths of a plurality of points-of-measurement P1 (area index values).

Additionally or alternatively, for example, the soil clods may be regarded as cubes, and the absolute values of the plurality of first index values (the depths of the points-of-measurement P1) or the plurality of third index values may be regarded as height index values corresponding to the height of the soil clods. In this case, the information processor 12 may calculate a plurality of area index values corresponding to the area of the soil clods (the area occupied by the soil clods on the ground surface Hs) by squaring each of the plurality of height index values, or may calculate a plurality of volume index values corresponding to the volume of the soil clods by cubing each of the plurality of height index values.

Additionally or alternatively, the soil clods may be regarded as spheres, and the absolute values of the plurality of first index values (the depths of the points-of-measurement P1) or the plurality of third index values may be regarded as diameter index values corresponding to the diameter of the soil clods. In this case, the information processor 12 may calculate the area index values for the soil clods by applying each diameter index value to the formula of the area of a circle, or may calculate the volume index values for the soil clods by applying each diameter index value to the formula of the volume of a sphere.

Then, the information processor 12 may classify each of the plurality of area index values into one of a corresponding plurality of ranges and may create a histogram indicating a distribution of the plurality of area index values. In addition to or instead of this, the information processor 12 may create another graph indicating a distribution of the plurality of area index values.

Additionally or alternatively, the information processor 12 may classify each of the plurality of volume index values into one of a corresponding plurality of ranges and may create a histogram indicating a distribution of the plurality of volume index values. In addition to or instead of this, the information processor 12 may create another graph indicating a distribution of the plurality of volume index values.

Additionally or alternatively, the information processor 12 may define a plurality of ranges corresponding to the area index values or a plurality of ranges corresponding to the volume index values such that the plurality of ranges correspond to the respective sieve mesh sizes of the plurality of types of sieves for use in the sieve analysis. Further, the information processor 12 may calculate a statistical value of the plurality of area index values and/or the plurality of volume index values.

As another example embodiment, the information processor 12 may calculate index values corresponding to the grain size of the soil clods based on the depths of the plurality of points-of-measurement P1. For example, the depths of the plurality of points-of-measurement P1 are regarded as the grain diameters of the soil clods, and respective grain size index values are defined for a plurality of predetermined ranges corresponding to the respective grain diameters. More specifically, "1" is defined as a grain size index value for the smallest range among the plurality of ranges, and grain size index values represented by integers of "2" or more are defined in the other ranges in ascending order. Additionally, grain size information indicating a correlation between the plurality of ranges of the depths and the grain size index values is stored in the storage device 13 or the internal memory of the information processor 12. Then, the information processor 12 calculates the grain size index value corresponding to the range including the depth of each point-of-measurement P1 among the plurality of ranges as the grain size index value for the soil clods corresponding to the depth of the point-of-measurement P1.

The information processor 12 may calculate an index value corresponding to at least one of the area occupied by the soil clods on the ground surface Hs or the volume of the soil clods on the ground surface Hs based on the plurality of grain size index values calculated for the respective depths of the points-of-measurement P1 as described above. For example, the number of pieces of data for the depths of the points-of-measurement P1 corresponding to each grain size index value determined as described above is regarded as the number of the soil clods corresponding to the grain size index value. The information processor 12 multiplies the squared value of each grain size index value by the number of pieces of data for the depths of the points-of-measurement P1 (the number of the soil clods) corresponding to the grain size index value to calculate a plurality of area index values. Additionally or alternatively, the information processor 12 multiplies the cubic value of each grain size index value by the number of pieces of data for the depths of the points-of-measurement P1 corresponding to the grain size index value to calculate a plurality of volume index values.

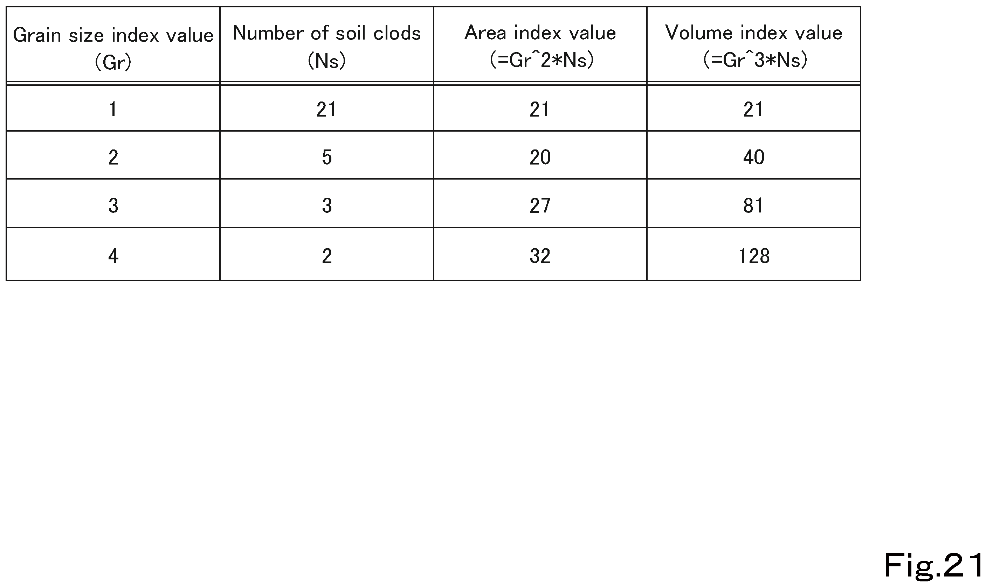

FIG. 21 is a diagram (table) presenting an example of a relationship among the numbers of the soil clods, a plurality of grain size index values, a plurality of area index values, and a plurality of volume index values. Specifically, the values in the respective columns in FIG. 21 are examples of values calculated by the information processor 12. In the example in FIG. 21, the plurality of grain size index values are "1" to "4". For example, the number of the soil clods (the number of pieces of data for the depth of the points-of-measurement P1) corresponding to the grain size index value of "2" is "5", and thus the corresponding area index value is 20 (= 2²×5) and the corresponding volume index value is 40 (= 2³×5).

The information processor 12 may, for example, voxelize the point cloud indicated by the primary point cloud data based on the depths of the plurality of points-of-measurement P1 to calculate voxel data. Then, the information processor 12 may calculate at least one of the grain size index value, the area index value, or the volume index value for the soil clods based on the voxel data.

The information processor 12 may calculate a plurality of index values of at least one of the plurality of grain size index values, the plurality of area index values based on the grain size index values, or the plurality of volume index values based on the grain size index values, and may create a graph (a histogram, a pie chart, a bar chart, or the like) indicating at least one of a distribution or proportions of the plurality of index values as the soil clod information.

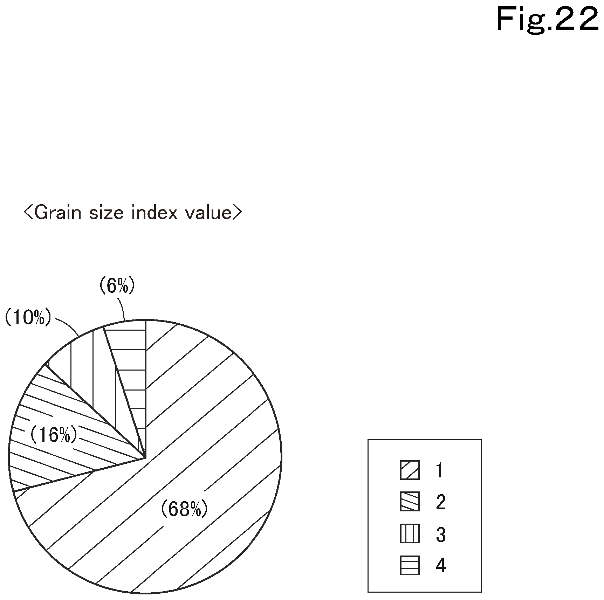

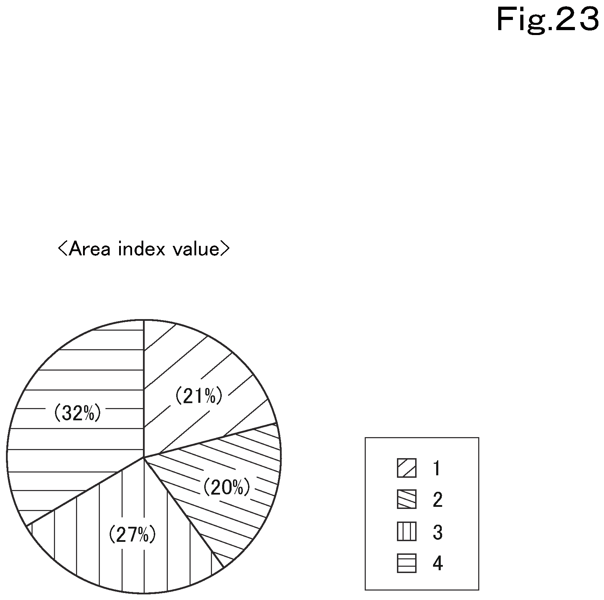

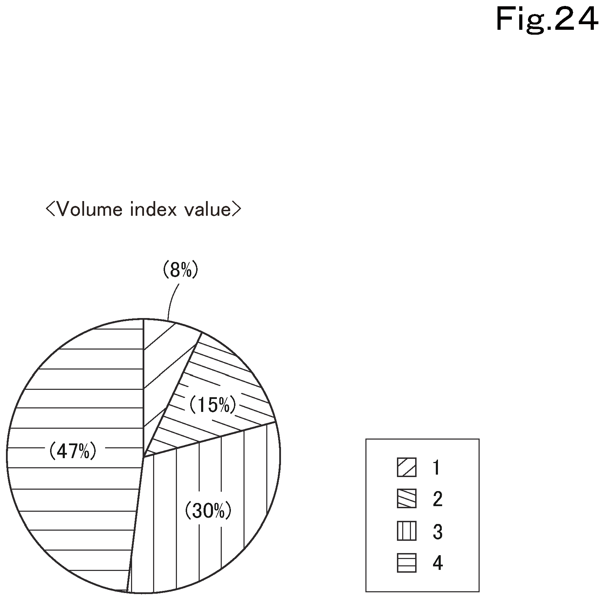

FIGS. 22 to 24 are diagrams presenting examples of pie charts created by the information processor 12. FIG. 22 illustrates an exemplary pie chart presenting proportions of the grain size index values for the soil clods presented in FIG. 21. In other words, the pie chart presented in FIG. 22 presents the ratio of the number of the soil clods corresponding to each grain size index value to the total number of the soil clods in FIG. 21. FIG. 23 illustrates an exemplary pie chart presenting proportions of the area index values for the soil clods presented in FIG. 21. In other words, the pie chart presented in FIG. 23 indicates the ratio of each area index value to the sum of the plurality of area index values in FIG. 21. FIG. 24 illustrates an exemplary pie chart presenting proportions of the volume index values for the soil clods presented in FIG. 21. In other words, the pie chart presented in FIG. 24 indicates the ratio of each volume index value to the sum of the plurality of volume index values in FIG. 21. The information processor 12 may create at least one of the pie charts as presented in FIGS. 22 to 24 as the soil clod information.

The information processor 12 may omit the creation of at least one of the histogram, the pie chart, or the bar chart described above. Additionally or alternatively, the information processor 12 may omit the calculation of the statistical value described above. Additionally or alternatively, the information processor 12 may regard the depths of the plurality of points-of-measurement P1 as the grain diameters of the soil clods, and may calculate the ratio of the number of grain diameters having a grain diameter of 2 cm or less to the total number of the grain diameters as a clod breaking rate. The clod breaking rate is also an index value for the soil clods, and may be included in the soil clod information.

After generating the soil clod information, the information processor 12 stores (outputs) the soil clod information in the storage device 13 (S20 in FIG. 4). At this time, the information processor 12 generates attribute information indicating an attribute of the soil clod information, and stores, in the storage device 13, the attribute information in association with the soil clod information. The attribute information may include, for example, attribute information of the primary point cloud data corresponding to the soil clod information (identification information and measurement position information of the agricultural field H where the primary point cloud data has been measured, and time information of the primary point cloud data), and time information indicating the time of the generation of the soil clod information.

In addition to the above, the information processor 12 may transmit (output) the soil clod information and the attribute information of the soil clod information to the management server 20 using the communication device 18 and may store the soil clod information and the attribute information in the database 22. Additionally or alternatively, the information processor 12 may cause the user interface 17 to display (output) the soil clod information. Instead of or in addition to this, the information processor 12 may transmit the soil clod information to the terminal device 30 using the communication device 18, and may cause the user interface 32 to display the soil clod information. In this regard, the information processor 12 may cause, for example, the user interface 17 or 32 to display at least one of the graphs (FIGS. 18 to 20, and FIGS. 22 to 24) indicating at least the proportions of the index values for the soil clods of the soil clod information.

Then, when there is at least one piece of unanalyzed primary point cloud data that has not been read in the target point cloud file (S21 in FIG. 4: YES), the information processor 12 reads one of the at least one piece of primary point cloud data (S11), and performs steps S12 to S21 as described above. In this manner, the information processor 12 repeatedly performs steps S11 to S21 to generate a plurality of pieces of soil clod information corresponding to a respective plurality of pieces of primary point cloud data outputted periodically from the agricultural field sensor assembly 11.

When there is no unanalyzed primary point cloud data in the target point cloud file (S21: NO), the information processor 12 ends the soil clod analysis process. Then, the information processor 12 reads soil clod information generated in the soil clod analysis process from the storage device 13, and outputs the soil clod information using the user interface 17 (S6 in FIG. 3). At this time, the information processor 12 refers to at least one piece of attribute information stored in the storage device 13, reads a plurality of pieces of soil clod information in time series corresponding to the agricultural field H, and causes the user interface 17 to display the plurality of pieces of soil clod information.

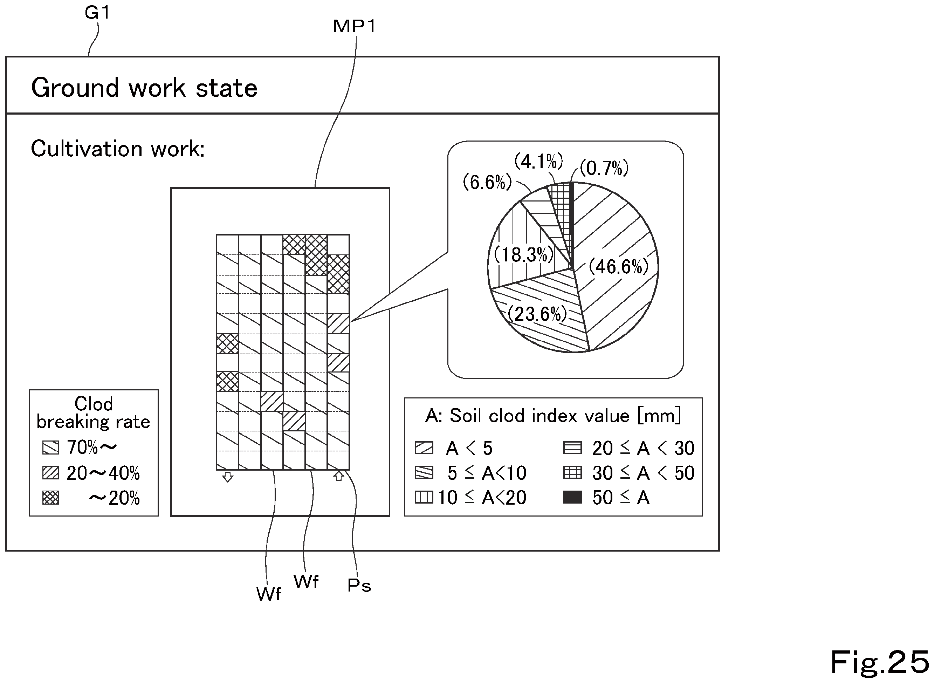

FIG. 25 is a view illustrating an example of a monitor screen G1 displayed on the user interface 17. The information processor 12 causes a display included in the user interface 17 to display the monitor screen G1 on which the soil clod information is displayed. Specifically, the information processor 12 reads (receives) agricultural field information and work record information corresponding to the agricultural field H from the storage device 13, and causes the user interface 17 to display, on the monitor screen G1, an agricultural field map MP1 indicated by the agricultural field information, the work record information, and the soil clod information.

As described above, the agricultural field sensor assembly 11 periodically performs, during the ground work performed by the working vehicle 1 and the working device 2, the process from (i) measuring the distances to the plurality of points-of- measurement P1 on the ground surface Hs within the predetermined detection range Q to (ii) outputting the primary point cloud data (S2 to S4 in FIG. 3). The information processor 12 generates the plurality of pieces of soil clod information in association with the plurality of pieces of primary point cloud data periodically outputted from the agricultural field sensor assembly 11 (S11 to S21 in FIG. 4). Additionally, the information processor 12 causes the user interface 17 to display the monitor screen G1 as illustrated in FIG. 25, to display the agricultural field map MP1 on the monitor screen G1, and to display one or more worked positions (work tracks) Wf indicated by the work record information on the agricultural field map MP1. The width of the one or more worked positions Wf coincides with the work width of the working device 2. The information processor 12 displays a plurality of pieces of soil clod information in a time-series manner from a start point Ps of the one or more worked positions Wf.

In the example in FIG. 25, the information processor 12 divides each of strip-shaped one or more worked positions Wf displayed on the agricultural field map MP1 into a plurality of sections in the longitudinal direction (the direction perpendicular to the strip-width direction, in other words, the working direction) in accordance with the size of the detection range Q. For example, the width of the detection range Q parallel to the vehicle-width direction of the working vehicle 1 may be defined to coincide with the width of the one or more worked positions Wf.

The information processor 12 assigns each of a plurality of respective clod breaking rates included in the plurality of pieces of soil clod information to one of the sections from the start point Ps in the order of calculation, and displays a pattern in accordance with the magnitude of the assigned clod breaking rate in the section. More specifically, the information processor 12 classifies each of the plurality of clod breaking rates into one of three ranges of less than 20%, 20% or more and less than 70%, and 70% or more, and displays a pattern corresponding to the classified range in the corresponding section. The information processor 12 displays a pattern in a manner that is visually emphasized more as the clod breaking rate assigned to each section is lower. In FIG. 25, for convenience, a hatching pattern is displayed in each section, but instead of this, a color pattern corresponding to the classified range may be displayed in each section. In this case, the section where the clod breaking rate is classified into the minimum range (< 20%) is emphasized with a red pattern, a highlight pattern, or the like.

When the user selects one of the sections of the one or more worked positions Wf displayed on the monitor screen G1 by the user interface 17, the information processor 12 displays, on the monitor screen G1, another soil clod information corresponding to the selected section in a remainder area of the monitor screen G1. In FIG. 25, the information processor 12 displays a pie chart presenting the ratio of each size of the soil clods presented in FIG. 18 as the other soil clod information, but this does not imply any limitation. Alternatively or additionally, the information processor 12 may display, on the monitor screen G1, at least one of the bar chart or the pie chart presenting the proportions of the area, the volume, or the grain size of the soil clods presented in FIGS. 19, 20, 22, 23, and/or 24, or at least one of the histograms presented in FIGS. 12, 17, and another drawing.

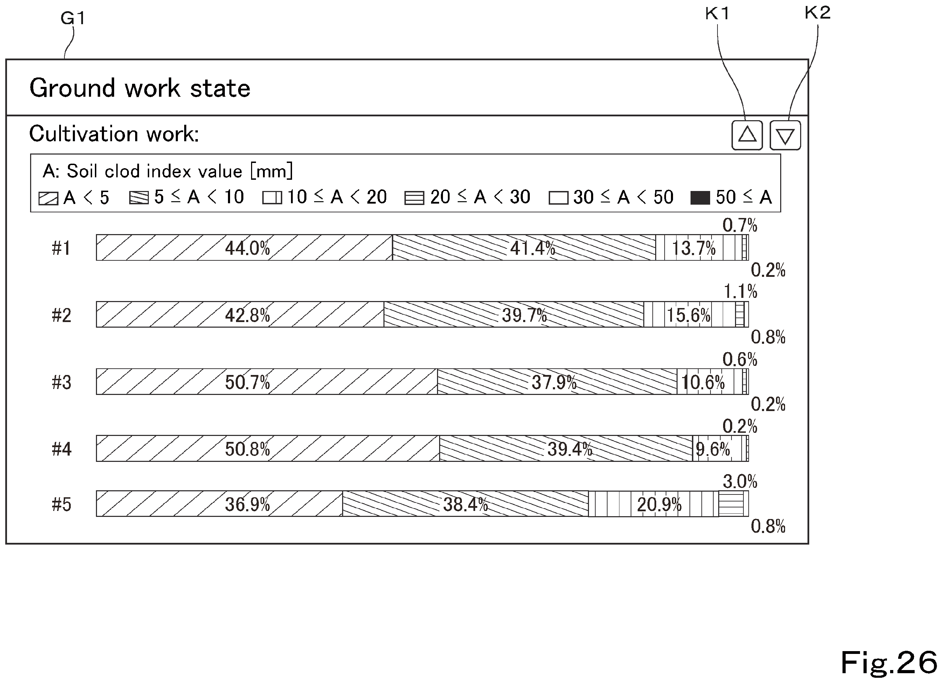

Alternatively or additionally, for example, when the user inputs an instruction to collectively display a plurality of pieces of soil clod information corresponding to a plurality of detection ranges Q using the user interface 17, the information processor 12 may display, on the monitor screen G1, the plurality of pieces of soil clod information, for example, as illustrated in FIG. 26. FIG. 26 illustrates a plurality of bar charts displayed by the information processor 12. The plurality of bar charts correspond to the plurality of detection ranges Q, respectively, and are arranged in the order of generation (order of work) toward the lower side of the monitor screen G1. Each bar chart indicates the proportion of (the ratios of respective sizes of the soil clods to) the corresponding third index values. Further, FIG. 26 illustrates the monitor screen G1 on which five bar charts corresponding to five detection ranges Q are displayed. In this regard, as an up key K1 or a down key K2 is operated, the information processor 12 displays, on the monitor screen G1, another bar chart corresponding to another detection range Q or other bar charts corresponding to respective other detection ranges Q.

Alternatively or additionally, the information processor 12 may display, on the monitor screen G1, numbers and/or figures indicating the above-described statistical values and index values such as the clod breaking rates as the soil clod information. Alternatively or additionally, the information processor 12 may display, on the monitor screen G1, a plurality of items indicating the contents of the index values, graphs, and so forth included in the soil clod information. Then, when the user selects one of the plurality of items using the user interface 17, the information processor 12 may display, on the monitor screen G1, the index value or the graph corresponding to the selected item.

Alternatively or additionally, the information processor 12 may transmit a plurality of pieces of soil clod information corresponding to a plurality of pieces of primary point cloud data to the terminal device 30 using the communication device 18, and may cause the user interface 32 to display the plurality of pieces of soil clod information. Alternatively or additionally, the user may operate the user interface 17 or 32 at a desired timing to receive a plurality of pieces of soil clod information corresponding to a plurality of pieces of primary point cloud data or soil clod information corresponding to one piece of primary point cloud data from the storage device 13 or the database 22 of the management server 20 and may cause the user interface 17 or 32 to display the soil clod information.

The information processor 12 determines, based on the soil clod information generated in the soil clod analysis process, whether to perform the ground work again by the working vehicle 1 and the working device 2 in the agricultural field H (S7 in FIG. 3). At this time, the information processor 12 refers to attribute information stored in the storage device 13, and determines whether to perform the ground work again based on the soil clod information corresponding to each measurement position indicated by the attribute information.

Specifically, the information processor 12 determines a representative index value based on at least one index value for the soil clods included in the soil clod information corresponding to each measurement position. The at least one index value included in the soil clod information defines at least one of the above-described various index values including the depth of the point-of-measurement P1, the area index value, the volume index value, the grain size index value, the statistical value thereof (for example, kurtosis, skewness, standard deviation, variance, mean, median, and/or mode), and the clod breaking rate. For example, the information processor 12 focuses on the depths (first index values) of the plurality of points-of-measurement P1 among the above-described various index values, and determines the ratio (%) of the number of depths within a predetermined ideal range to the total number of depths as a representative index value. Then, the information processor 12 determines that the ground work needs to be performed again when the representative index value is a threshold or more (S7: YES), and determines that the ground work does not need to be performed again when the representative index value is less than the threshold (S7: NO).

Alternatively, the information processor 12 may focus on the area index values, the volume index values, or the grain size index values for the soil clods, instead of the depths of the plurality of points-of-measurement P1, and the information processor 12 may similarly determine, as the representative index value, the ratio (%) of the number (the number of pieces of data) of the area index values, the volume index values, or the grain size index values for the soil clods within the ideal range to the total number (the total number of pieces of data) of the area index values, the volume index values, or the grain size index values for the soil clods, and may compare the representative index value with a corresponding threshold to determine whether to perform the ground work again.

Alternatively or additionally, the information processor 12 may determine the statistical value or the clod breaking rate as the representative index value. Specifically, the information processor 12 may determine, as the representative index value, the standard deviation, the variance, the mean, the median, or the mode of the depths of the plurality of points-of-measurement P1, the area index values, the volume index values, or the grain size index values. Then, the information processor 12 may determine that the ground work needs to be performed again when the representative index value is a threshold or more (S7: YES), and may determine that the ground work does not need to be performed again when the representative index value is less than the threshold (S7: NO).

The information processor 12 may determine, as the representative index value, the kurtosis or the skewness of the depths of the plurality of points-of- measurement P1, the area index values, the volume index values, or the grain sizes. In this case, the information processor 12 may determine that the ground work needs to be performed again when the absolute value of the representative index value is a corresponding threshold or more (S7: YES), and may determine that the ground work does not need to be performed again when the absolute value of the representative index value is less than the threshold (S7: NO).

In the case where the clod breaking rate is determined as the representative index value, the information processor 12 may determine that the ground work needs to be performed again when the absolute value of the representative index value is less than a corresponding threshold (S7: YES), and may determine that the ground work does not need to be performed again when the absolute value of the representative index value is the threshold or more (S7: NO).

Alternatively or additionally, the information processor 12 may determine a plurality of representative index values from a plurality of index values included in the soil clod information. In this case, the information processor 12 may compare all the representative index values with respective corresponding thresholds. When comparison of all the representative index values with the respective corresponding thresholds results in no-need determination that the ground work does not need to be performed again, the information processor 12 may confirm the no-need determination (S7: NO). When comparison of at least one of the representative index values with the corresponding threshold results in need determination that the ground work needs to be performed again, the information processor 12 may confirm the need determination (S7: YES).

When the information processor 12 determines that the ground work needs to be performed again (S7: YES), the information processor 12 determines, based on the soil clod information, at least one adjustment value of (for) at least one work condition relating to at least one of the working vehicle 1 or the working device 2. At this time, the information processor 12 determines the adjustment value of at least one of work conditions including, for example, the traveling speed of the working vehicle 1, the rotation speed of the working blades 2g of the working device 2, the position (work depth) of the working blades 2g in the vertical direction, and/or the contact pressure of the working plate 2h of the working device 2 against the soil.

In this regard, in accordance with a deviation between the representative index value and the threshold (a value obtained by subtracting the threshold from the representative index value), the information processor 12 may determine, as the adjustment value of the work condition, a target value of the work condition (a target traveling speed of the working vehicle 1, a target rotation speed of the working blades 2g, a target position of the working blades 2g, or a target contact pressure of the working plate 2h) or an amount of change of the work condition (for example, an amount of reduction in the traveling speed of the working vehicle 1, an amount of increase in the rotation speed of the working blades 2g, an amount of lowering of the working blades 2g, an amount of reduction in the contact pressure of the working plate 2h, or the like),.

More specifically, for example, a relationship between the deviation between the representative index value and the threshold, and the adjustment value of the work condition that is used to make the deviation zero may be defined in advance through an experiment, and a control table or a control expression indicating the relationship may be stored in the internal memory or the storage device 13. Then, the information processor 12 may determine, from the control table, or may calculate, using the control expression, the adjustment value of the work condition corresponding to the deviation between the threshold and the representative index value determined from the soil clod information. In this case, as the deviation increases, the information processor 12 may determine the adjustment value of the traveling speed of the working vehicle 1 so that the traveling speed decreases, may determine the adjustment value of the rotation speed of the working blades 2g so that the rotation speed increases, may determine the adjustment value of the position of the working blades 2g in the vertical direction so that the position is lowered, or may determine the adjustment value of the contact pressure of the working plate 2h so that the contact pressure decreases.

Alternatively or additionally, the information processor 12 may acquire (receive), from the storage device 13 or the like, driving information indicating a work condition when the ground work has been performed, and may determine an adjustment value of the work condition based on the driving information and the soil clod information. Alternatively or additionally, the information processor 12 may detect a current work condition based on an output signal from a sensor of the vehicle sensor assembly 15, and may determine the adjustment value of the work condition based on the current work condition and the soil clod information.

Instead of or in addition to the determination of the adjustment value of the work condition, the information processor 12 may determine, based on the agricultural field information, the work record information, and the soil clod information, at least one area of the agricultural field H as a retry area where the ground work is to be performed again. At this time, the information processor 12 determines, as the retry area, an area including the measurement position to be measured by the agricultural field sensor assembly 11 (the position of the detection range Q) that corresponds to the index value (the representative index value) for which it is determined that the ground work is to be performed again, and detects one or more positions each corresponding to the retry area from one or more worked positions where work has been performed in the agricultural field H based on the agricultural field information and the work record information.

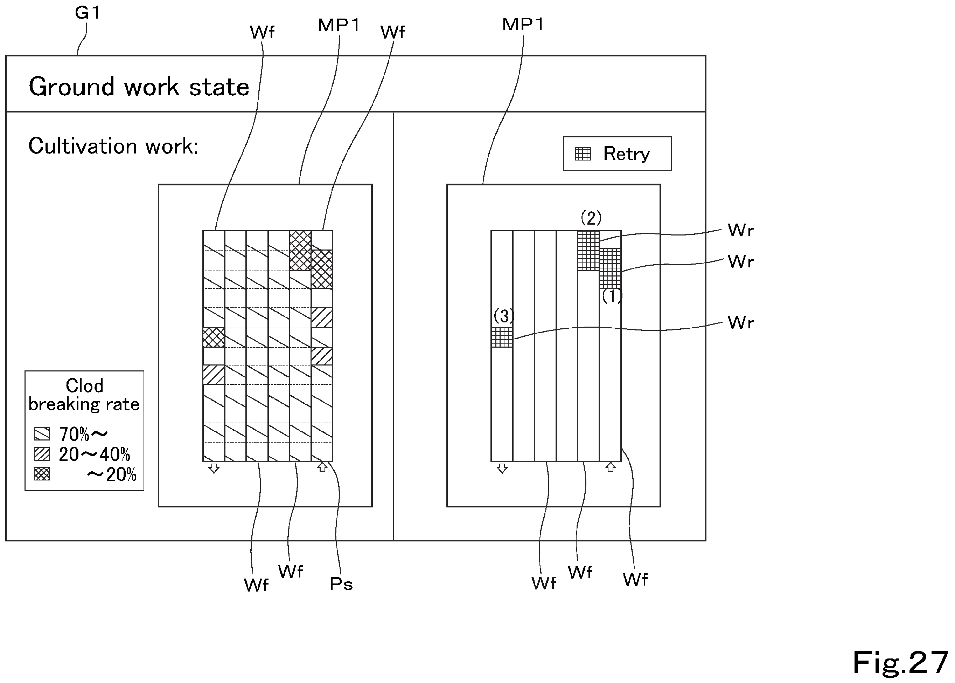

Then, the information processor 12 generates control information indicating at least one of the adjustment value (or values) of the work condition or the retry area (or areas), and outputs the control information (S8). At this time, the information processor 12 may transmit (output) the control information to the vehicle controller 14. Additionally or alternatively, the information processor 12 may store the control information in the storage device 13 and may cause the user interface 17 to display the control information, for example, as illustrated in FIG. 27.

Regarding the example illustrated in FIG. 27, the information processor 12 displays a plurality of retry areas Wr in one or more worked positions Wf on an agricultural field map MP1 displayed on the right half of the monitor screen G1 in a manner different from the manner of one or more areas other than the retry areas Wr. Additionally, the information processor 12 determines the work order for the plurality of retry areas Wr based on at least one of the agricultural field information, the work record information, or the soil clod information, and displays numeral signs in parentheses indicating the work order on the agricultural field map MP1 ((1), (2), and (3) in FIG. 27). The information processor 12 may display, on the monitor screen G1, the adjustment value of at least one of the traveling speed of the working vehicle 1, the rotation speed of the working blades 2g of the working device 2, or the position of the working blades 2g in the vertical direction.

Then, the working vehicle 1 performs the ground work again using the working device 2 while traveling in the agricultural field H by automatic operation or manual operation (S9 in FIG. 3). Specifically, for example, the vehicle controller 14 receives the control information outputted from the information processor 12. When the control information indicates the adjustment value of the work condition, the vehicle controller 14 controls the driving of at least one of the prime mover 4, the transmission 6, the raising/lowering device 9, the auxiliary raising/lowering device 2a, or the auxiliary adjustment actuator 2z based on the adjustment value, so as to adjust at least one of the traveling speed of the working vehicle 1, the rotation speed of the working blades 2g of the working device 2, the position of the working blades 2g in the vertical direction, or the contact pressure of the working plate 2h. Then, the vehicle controller 14 causes the working device 2 to perform the ground work again while causing the working vehicle 1 to travel in the agricultural field H by automatic operation. Alternatively, the operator (driver) performs the ground work again using the working device 2 while causing the working vehicle 1 to travel in the agricultural field H by manual operation.

When the control information indicates one or more retry areas Wr in the agricultural field H, for example, the vehicle controller 14 causes the working device 2 to perform the ground work in the one or more retry areas Wr while causing the working vehicle 1 to travel in the agricultural field H by automatic operation, based on the position of the working vehicle 1 measured by the position detector 16, the agricultural field information received (read) from the storage device 13, and the control information.

Alternatively or additionally, the information processor 12 causes the user interface 17 to display control information, and the operator confirms the control information. Then, when the control information indicates the adjustment value of the work condition, the operator manually operates the driving of at least one of the prime mover 4, the transmission 6, the PTO shaft 61, the raising/lowering device 9, the auxiliary raising/lowering device 2a, or the lock body 2e of the working device 2 using the operation unit 19 based on the adjustment value, to adjust at least one of the traveling speed of the working vehicle 1, the rotation speed of the working blades 2g of the working device 2, the position of the working blades 2g in the vertical direction, or the contact pressure of the working plate 2h. Alternatively or additionally, when the control information indicates one or more retry areas Wr, the operator causes the working device 2 to perform the ground work again in the one or more retry areas Wr while causing the working vehicle 1 to travel in the agricultural field H by manual operation.

The step S1 and the subsequent steps in FIG. 3 may be performed also while the ground work is performed again in the agricultural field H by the working vehicle 1 and the working device 2. In this regard, the information processor 12 may store, in the storage device 13, a piece of soil clod information generated based on primary point cloud data outputted from the agricultural field sensor assembly 11 during first ground work, and a piece of soil clod information generated based on primary point cloud data outputted from the agricultural field sensor assembly 11 during second ground work, in association with the corresponding measurement position in the agricultural field H. Then, the information processor 12 may display both the pieces of soil clod information on the monitor screen G1 in a comparable manner.

In the above-described example embodiment, the information processor 12 determines whether to perform the ground work again, and then determines at least one of the adjustment value of the work condition or the retry area, but this does not imply any limitation to this configuration. The information processor 12 may omit the determination of whether to perform the ground work again, may determine at least one of the adjustment value of the work condition or the retry area based on the soil clod information or the like, and may output the control information.

Alternatively, instead of the information processor 12, the vehicle controller 14 may receive the soil clod information and may determine whether to perform the ground work again based on the soil clod information. In this case, the vehicle controller 14 may determine at least one of the adjustment value of the work condition or the retry area based on the soil clod information or the like.

Alternatively, the determination of whether to perform the ground work again may be omitted. The vehicle controller 14 may receive the soil clod information from the information processor 12 or the storage device 13, and may control the driving of at least one of the prime mover 4, the transmission 6, the PTO shaft 61, the raising/lowering device 9, the auxiliary raising/lowering device 2a, the auxiliary adjustment actuator 2z, or the like based on the soil clod information, to adjust the work condition such as at least one of the traveling speed of the working vehicle 1, the rotation speed of the working blades 2g, the position of the working blades 2g in the vertical direction, or the contact pressure of the working plate 2h against the soil.

The above-described work condition is an example, and this does not imply any limitation. The information processor 12 may determine an adjustment value of a work condition other than the above. For example, the information processor 12 or the vehicle controller 14 may determine, based on the soil clod information, the adjustment value of at least one of work conditions such as the interval between working tools such as a plurality of blades or pins provided in the working device 2, the contact pressure of the working tools against the soil, the angle of the working tools against the soil, the rotation speed of the rotor, the weight of the working device 2, and the rotation speed of the PTO shaft 61. Then, the vehicle controller 14 may automatically adjust the work conditions using the corresponding actuators based on the adjustment values of the work conditions. Alternatively or additionally, the operator may manually adjust the work conditions based on the adjustment values of the work conditions.

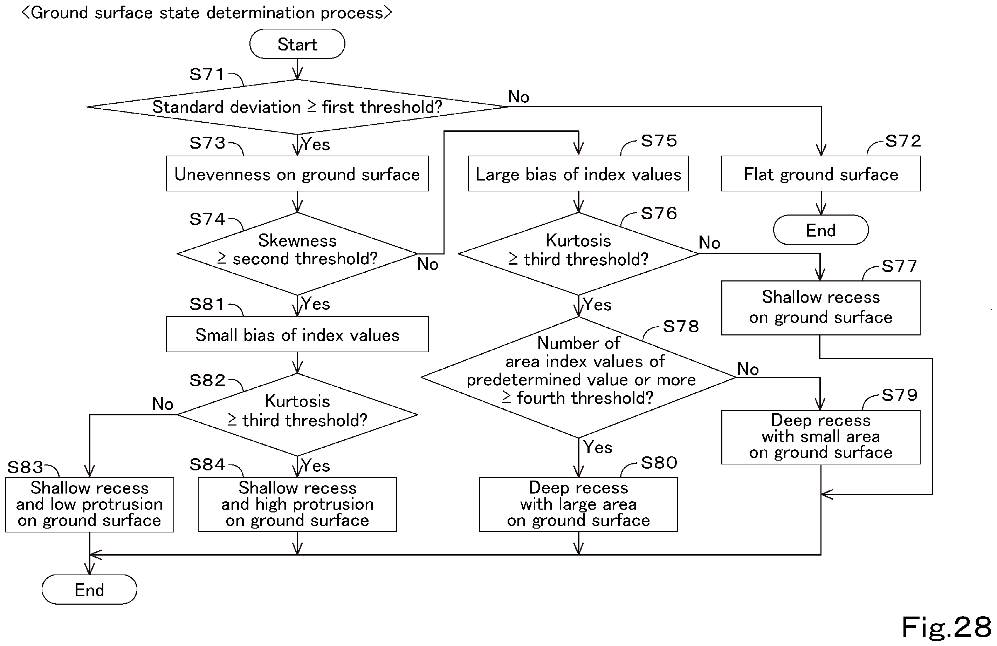

The information processor 12 may determine the uneven state of the ground surface Hs based on the statistical value of the index values for the soil clods. FIG. 28 is a flowchart presenting an example of a ground surface state determination process. For example, when the standard deviation among the statistical values of the plurality of first index values (the depths of the plurality of points-of- measurement P1) is less than a corresponding first threshold (S71: NO), the information processor 12 determines that the ground surface Hs in the measurement position about the corresponding primary point cloud data is flat (S72). Note that the term "flat" means a state in which there are no recesses and protrusions with a predetermined size or more due to the soil clods.

In contrast, when the standard deviation is the first threshold or more (S71: YES), the information processor 12 determines that there are recesses and protrusions with the predetermined size or more due to the soil clods on the ground surface Hs (S73). Next, when the skewness of the plurality of first index values is less than a second threshold (S74: NO), the information processor 12 determines that the bias of the corresponding plurality of index values is large (S75). Next, when the kurtosis of the plurality of first index values is less than a third threshold (S76: NO), the information processor 12 determines that there is a shallow recess on the ground surface Hs (S77).

In contrast, when the kurtosis is the third threshold or more (S76: YES), the information processor 12 refers to the plurality of area index values calculated based on the plurality of first index values. Then, when the number of the area index values that are a predetermined value or more is less than a fourth threshold (S78: NO), the information processor 12 determines that there is a deep recess with a small area (occupied area) on the ground surface Hs (S79). In contrast, when the number of the area index values that are the predetermined value or more is the fourth threshold or more (S78: YES), the information processor 12 determines that there is a deep recess with a large area on the ground surface Hs (S80).

In contrast, when the skewness is the second threshold or more (S74: YES), the information processor 12 determines that the bias of the corresponding plurality of index values is small (S81). Then, when the kurtosis is less than the third threshold (S82: NO), the information processor 12 determines that there are a shallow recess and a low protrusion on the ground surface Hs (S83). In this case, the information processor 12 may determine that the target area is substantially flat. In contrast, when the kurtosis is the third threshold or more (S82: YES), the information processor 12 determines that there are a shallow recess and a high protrusion on the ground surface Hs (S84).

The information processor 12 performs the ground surface state determination process for each primary point cloud data. Then, the information processor 12 may output the determination result of the uneven state of the ground surface Hs determined in the ground surface state determination process by adding the determination result to the soil clod information. In other words, the information processor 12 may store the determination result of the uneven state of the ground surface Hs in the storage device 13 and may cause the user interface 17 to display the determination result on the monitor screen G1.

The information processor 12 may, for example, classify each of the depths of the plurality of points-of-measurement P1 into one of a plurality of clusters, and may determine a plurality of ranges of the histogram of the depths based on the plurality of clusters. Alternatively or additionally, the information processor 12 may communicate with artificial intelligence (AI) provided in the management server 20 using the communication device 18, and may classify each of the depths of the plurality of points-of-measurement P1 into one of a plurality of clusters by using the AI. Alternatively or additionally, for example, the AI is trained to classify each of the depths of the plurality of points-of- measurement P1 by the k-means algorithm, and then the AI may classify each of the depths of the plurality of points-of-measurement P1 into one of clusters by the k-nearest neighbor algorithm.

In the above-described example embodiment, the information processor 12 sequentially analyzes the plurality of pieces of primary point cloud data outputted from the agricultural field sensor assembly 11 after the end of the ground work in the agricultural field H, but this does not imply any limitation to this configuration. During the ground work in the agricultural field H by the working vehicle 1 and the working device 2, each time the agricultural field sensor assembly 11 outputs the primary point cloud data, the information processor 12 may analyze the primary point cloud data and may generate the soil clod information. The soil clod information is not limited to the index value for the soil clods and the graph described above, and may be at least one of another index value for the soil clods, a graph, a figure, a table, text data, or the like.

In the above-described example embodiment, the agricultural field sensor assembly 11 is provided in at least one of the working vehicle 1 or the working device 2, and the information processor 12, the storage device 13, and the vehicle controller 14 are provided in the working vehicle 1, but this does not imply any limitation to this configuration. For example, the agricultural field sensor assembly 11 may be provided in another vehicle or the agricultural field H. In this case, a communication device (communication interface) that transmits the primary point cloud data outputted by the agricultural field sensor assembly 11 to the information processor 12, the management server 20, the terminal device 30, another external device, or a computer provided in a cloud system may be connected to the agricultural field sensor assembly 11.

The information processor 12 may be the management server 20, the terminal device 30, another external device, or a computer provided in a cloud system. The storage device 13 may be included in the management server 20, the terminal device 30, another external device, or a computer provided in a cloud system. The vehicle controller 14 may be the terminal device 30 used by the user, or may be a remote device that remotely operates the working vehicle 1. The agricultural field sensor assembly 11, the information processor 12, the storage device 13, and the vehicle controller 14 may be provided in different vehicles, machines, or devices. Alternatively or additionally, the information processor 12 and the vehicle controller 14 may be a single computer. Alternatively or additionally, the information processor 12 may include a plurality of computers. Alternatively or additionally, the vehicle controller 14 may include a plurality of ECUs, may include a plurality of computers, or may include an ECU and a computer.

In the above-described example embodiment, the agricultural field sensor assembly 11 detects the ground surface Hs of the agricultural field H where the ground work has been performed by the working vehicle 1 and the working device 2 and generates the primary point cloud data, but this does not imply any limitation to this configuration. For example, after the working vehicle 1 performs ground work not including clod breaking in the agricultural field H using the working device 2, or after another working vehicle or the like performs ground work not including clod breaking or ground work including clod breaking in the agricultural field H, the agricultural field sensor assembly 11 may detect the ground surface Hs and generate the primary point cloud data. The agricultural field sensor assembly 11 may detect the entirety or a portion of the ground surface Hs of the agricultural field H and may generate at least one piece of primary point cloud data.

Additionally or alternatively, at least one operation switch for inputting at least one of a command to start measurement or a command to start analysis may be provided in the working vehicle 1 or the like of the soil clod analysis system 100. Then, when the user inputs the command to start measurement using the operation switch, the agricultural field sensor assembly 11 may perform the process from (i) measuring the distances to (ii) outputting the primary point cloud data, and the information processor 12 may perform the soil clod analysis process based on the primary point cloud data. Alternatively or additionally, when the user inputs the command to start analysis using the operation switch, the information processor 12 may perform the soil clod analysis process based on the primary point cloud data.

The present embodiment described above discloses at least configurations of items described below and attains effects.

(Item 1) A system 100 to analyze soil clods on a ground surface Hs of an agricultural field H according to an example embodiment of the present invention includes an agricultural field sensor assembly 11 including at least one range sensor 11a oriented toward the ground surface Hs, and an information processor 12. The agricultural field sensor assembly 11 is configured to: measure distances to a plurality of points-of-measurement P1 on the ground surface Hs; and generate primary point cloud data indicating three-dimensional positions of the plurality of points-of-measurement P1 including measured values of the distances, and output the primary point cloud data. The information processor 12 is configured to: receive the primary point cloud data, and calculate a plurality of characteristic values based on the measured values of the distances included in the primary point cloud data; calculate secondary point cloud data indicating three-dimensional positions of a plurality of points-of-reference P2 including the plurality of characteristic values based on the primary point cloud data; calculate an approximated curved surface M2 based on the secondary point cloud data; calculate depths of the plurality of points-of-measurement P1 with respect to the approximated curved surface M2 based on the approximated curved surface M2 and the measured values of the distances; and generate soil clod information relating to the soil clods based on the depths of the plurality of points-of-measurement P1, and output the soil clod information.

According to the configuration of Item 1, the information processor 12 calculates the plurality of characteristic values based on the measured values of the distances included in the primary point cloud data outputted from the agricultural field sensor assembly 11, and calculates the secondary point cloud data including the plurality of characteristic values. Then, the information processor 12 calculates the approximated curved surface that is neither a plane nor a slope surface inclined at a certain angle, based on the secondary point cloud data. Thus, even when there are a plurality of irregular inclinations and/or undulations on the ground surface Hs of the agricultural field H, the inclinations and/or the undulations can be eliminated or reduced, and the approximated curved surface M2 obtained by modeling the uneven state generated due to the soil clods on the ground surface Hs can be generated. Then, the information processor 12 calculates the depths of the plurality of points-of- measurement P1 with respect to the approximated curved surface M2 based on the approximated curved surface M2 and the measured values of the distances, and thus the soil clods can be appropriately analyzed using the plurality of depths as the index values of the size of the soil clods. In other words, even when there are a plurality of irregular inclinations and/or undulations on the ground surface Hs of the agricultural field H, the soil clods on the ground surface Hs can be appropriately analyzed. By performing ground work including clod breaking by the working vehicle 1 or the like in the agricultural field H based on the soil clod information outputted from the information processor 12, the size of the soil clods on the ground surface Hs can be appropriately adjusted, and the performance of work in the agricultural field, the productivity of crops, and/or the like can be improved.

(Item 2) In the configuration of Item 1, the information processor 12 is configured to calculate the approximated curved surface M2 by applying cubic spline interpolation to the secondary point cloud data.

According to the configuration of Item 2, since the approximated curved surface M2 passing through the point cloud included in the secondary point cloud data, in other words, the plurality of points-of-reference P2 is calculated, the secondary point cloud data is not excessively smoothed, and the suitability of the approximated curved surface M2 with the plurality of irregular inclinations and undulations on the ground surface Hs eliminated or reduced can be improved.

(Item 3) In the configuration of Item 1 or 2, the information processor 12 is configured to: in a three-dimensional coordinate system corresponding to the primary point cloud data, divide an X-Y plane by a grid with a predetermined mesh size to define a plurality of cells C1 on the X-Y plane, the X-Y plane being perpendicular to a Z axis indicating the measured values of the distances; calculate the characteristic values corresponding to the cells C1 based on the measured values of the distances to the plurality of points-of-measurement P1 located directly above and/or directly below the cells C1; and define, directly above or directly below the cells C1, the points-of-reference P2 in which the corresponding characteristic values are defined as positions on the Z axis.

According to the configuration of Item 3, since the characteristic values of the distances to the points-of-measurement P1 are calculated and the points-of-reference P2 are defined for the cells C1 defined on the X-Y plane, the suitability of the approximated curved surface M2 calculated based on the secondary point cloud data indicating the three-dimensional positions of the points-of-reference P2 can be further improved. Then, the soil clod information relating to the desired size of the soil clods can be generated using the depths of the plurality of points-of- measurement P1 calculated based on the approximated curved surface M2.

(Item 4) In the configuration of Item 3, the information processor 12 is configured to calculate, as each of the characteristic values, a median of the measured values of the distances to the points-of-measurement P1 located directly above and/or directly below the corresponding cell C1.

According to the configuration of Item 4, for each cell C1 defined on the X-Y plane, since the average point-of-reference P2 is defined for the measured values of the distances to the plurality of points-of-measurement P1, and the secondary point cloud data indicating the three-dimensional positions of the points-of-reference P2 is generated, the approximated curved surface M2 with reduced deviation from the ground surface Hs can be calculated based on the secondary point cloud data. In particular, for example, the approximated curved surface M2 with a reduced difference in height from the ground surface Hs can be calculated as compared with a case where the mean of the measured values of the distances to the plurality of points-of-measurement P1 of the cell C1 is calculated as the characteristic value. Then, as a result, the suitability of the approximated curved surface M2 and the suitability of the soil clod analysis can be further improved.

(Item 5) In the configuration of Item 3 or 4, the system 100 includes a storage device (a storage device 13 or an internal memory in the information processor 12) to store work information indicating at least one of a type of previous work in the agricultural field, a type of next work in the agricultural field, or a type of at least one crop to be grown. The information processor 12 is configured to receive the work information, and determine the mesh size based on the work information.

According to the configuration of Item 5, since the mesh size and the size of the cell C1 are determined in accordance with at least one of the type of previous work in the agricultural field H, the type of next work in the agricultural field H, or the type of at least one crop to be grown, the plurality of characteristic values and the points-of-reference P2 can be defined in accordance with the type, and the suitability of the approximated curved surface M2 can be further improved. More specifically, for example, a plurality of cells C1 corresponding to soil clods with a desired size to be finished by ground work are defined, and an appropriate approximated curved surface M2 can be generated. Then, soil clod information obtained by analyzing the soil clods with the desired size can be generated from the depths of the plurality of points-of-measurement P1 calculated based on the approximated curved surface M2, and a finished state or the like of the ground work can also be appropriately determined from the soil clod information.

(Item 6) In the configuration of any one of Items 1 to 5, the information processor 12 is configured to: in a three-dimensional coordinate system corresponding to the primary point cloud data, extract, from the approximated curved surface M2, a plurality of points-of- interest P5 located at the same positions in an X-Y plane as the respective corresponding points-of-measurement P1, the X-Y plane being perpendicular to a Z axis indicating the measured values of the distances; determine positions of the plurality of points-of- interest P5 on the Z axis as reference values; and calculate, as each of the depths of the plurality of points-of-measurement P1, a difference between (i) a corresponding one of the measured values of the distances to the plurality of points-of-measurement P1 and (ii) a corresponding one of the reference values of the plurality of points-of-interest P5 corresponding to the respective plurality of points-of-measurement P1.

According to the configuration of Item 6, the suitability of the depths of the plurality of points-of-measurement P1 serving as index values of the size of the soil clods on the ground surface Hs can be improved.

(Item 7) In the configuration of any one of Items 1 to 6, the information processor 12 is configured to determine a plurality of index values for the soil clods based on the depths of the plurality of points-of-measurement P1, classify each of the plurality of index values into one of a plurality of ranges, and generate the soil clod information indicating at least one of a distribution of the plurality of index values or proportions of the plurality of index values.

According to the configuration of Item 7, the soil clod information such as a graph (a histogram, a pie chart, a bar chart, or the like) indicating at least one of the distribution or the proportions of the sizes of the soil clods on the ground surface Hs can be outputted. Thus, the user, the controller 14, or the like can recognize at least one of the distribution or the proportions of the sizes of the soil clods with reference to the soil clod information, and can assist the subsequent work to be performed by the working vehicle 1 and/or the like in the agricultural field H.

(Item 8) In the configuration of any one of Items 1 to 7, the information processor 12 is configured to determine a plurality of index values for the soil clods based on the depths of the plurality of points-of-measurement P1, and calculate, as the soil clod information, at least one statistical value including at least one of a standard deviation, a variance, a skewness, or a kurtosis of the plurality of index values.

According to the configuration of Item 8, the user, the controller 14, or the like can recognize the distribution or the variation of the sizes of the soil clods on the ground surface Hs with reference to the statistical value included in the soil clod information.

(Item 9) In the configuration of Item 7, the information processor 12 is configured to determine the plurality of ranges such that the plurality of ranges correspond to respective sieve mesh sizes of a plurality of types of sieves for use in a sieve analysis of the soil clods in the agricultural field H.

According to the configuration of Item 9, the distribution of the sizes of the soil clods on the ground surface Hs can be analyzed on the same scale as that of the manual sieve analysis of the soil clods in the agricultural field H, and the usefulness and versatility of the soil clod information indicating the analysis result can be improved.

(Item 10) In the configuration of any one of Items 7 to 9, the system 100 includes a storage device (a storage device 13 or an internal memory in the information processor 12) to store work information indicating at least one of a type of previous work in the agricultural field H, a type of next work in the agricultural field H, or a type of at least one crop to be grown. The information processor 12 is configured to receive the work information, and determine the plurality of ranges based on the work information.

According to the configuration of Item 10, since the plurality of ranges for classifying the index values for the soil clods are determined in accordance with at least one of the type of previous work in the agricultural field H, the type of next work in the agricultural field H, or the type of at least one crop to be grown, the sizes of the soil clods can be analyzed in accordance with the type, and the usefulness and versatility of the soil clod information indicating the analysis result can be improved.

(Item 11) In the configuration of any one of Items 1 to 10, the information processor 12 is configured to calculate, based on the depths of the plurality of points-of-measurement P1, a plurality of index values corresponding to a grain size of the soil clods, an area occupied by the soil clods on the ground surface Hs, or a volume of the soil clods, and generate the soil clod information indicating a distribution and proportions of the plurality of index values.

According to the configuration of Item 11, the soil clod information such as a graph indicating at least one of the distribution or the proportions of the grain size, the area, or the volume of the soil clods on the ground surface Hs can be outputted. Thus, the user, the controller 14, or the like can recognize at least one of the distribution or the proportions of the grain size, the area, or the volume of the soil clods with reference to the soil clod information.

(Item 12) In the configuration of any one of Items 1 to 11, the agricultural field sensor assembly 11 is configured to measure the distances to the plurality of points-of-measurement P1 on the ground surface Hs of the agricultural field H where ground work including clod breaking has been performed by a working vehicle 1 using a working device 2 while traveling, and generate the primary point cloud data.

According to the configuration of Item 12, the soil clod information indicating the size and the distribution of the soil clods on the ground surface Hs of the agricultural field H after the ground work is performed by the working vehicle 1 and the working device 2 can be outputted. Based on the soil clod information, the ground work including the clod breaking can be appropriately performed again by the working vehicle 1 and the working device 2 in the agricultural field H, and by appropriately adjusting the size of the soil clods on the ground surface Hs, the performance of work in the agricultural field, the productivity of crops, and/or the like can be improved.

(Item 13) In the configuration of Item 12, the system 100 includes a storage device (a storage device 13 or an internal memory in the information processor 12) to store agricultural field information indicating an agricultural field map MP1 representing the agricultural field H and work record information indicating one or more worked positions Wf where the ground work has been performed by the working vehicle 1 and the working device 2 in the agricultural field H. The information processor 12 is configured to: receive the agricultural field information and the work record information; and cause a user interface 17 to display, on a single screen (monitor screen) G1, the agricultural field map MP1, the work record information, and the soil clod information.

According to the configuration of Item 13, the sizes of the soil clods and the distribution of the sizes in the one or more worked positions Wf of the agricultural field H are displayed on the screen G1, and thus the user can easily recognize the sizes of the soil clods and the distribution of the sizes.

(Item 14) In the configuration of Item 13, the agricultural field sensor assembly 11 is provided in or on at least one of the working vehicle 1 or the working device 2, and configured to periodically perform, during the ground work, a process from (i) measuring the distances to the plurality of points-of- measurement P1 on the ground surface Hs within a predetermined detection range Q to (ii) outputting the primary point cloud data. The information processor 12 is configured to: generate a plurality of pieces of the soil clod information corresponding to a respective plurality of pieces of the primary point cloud data outputted periodically from the agricultural field sensor assembly 11; and cause the user interface 17 to, on the agricultural field map MP1 displayed by the user interface 17, display the one or more worked positions Wf indicated by the work record information, and display the plurality of pieces of soil clod information in a time-series manner from a start point of the one or more worked positions Wf.

According to the configuration of Item 14, while the ground work is performed by the working vehicle 1 and the working device 2 in the agricultural field H, the ground surface Hs where the ground work has been performed can be captured by the agricultural field sensor assembly 11 for each area corresponding to the detection range Q of the agricultural field sensor assembly 11, and the soil clods can be analyzed for each area. Then, the soil clod information for each area is displayed in a time-series manner from the start point of the one or more worked positions Wf in the agricultural field map MP1 displayed on the screen G1, and thus the sizes of the soil clods and the distribution of the sizes in the one or more worked positions Wf of the agricultural field H can be easily recognized by the user.

(Item 15) In the configuration of any one of claims 12 to 14, the information processor 12 is configured to determine at least one adjustment value for at least one work condition relating to at least one of the working vehicle 1 or the working device 2 based on the soil clod information, and output control information indicating the at least one adjustment value.

According to the configuration of Item 15, the at least one work condition relating to at least one of the working vehicle 1 or the working device 2 can be appropriately adjusted in accordance with the state of the soil clods on the ground surface Hs based on the at least one adjustment value indicated by the control information, and the ground work can be further appropriately performed again by the working vehicle 1 and the working device 2 after the adjustment.

(Item 16) In the configuration of Item 15, the system 100 includes a controller (in-vehicle controller) 14 configured or programmed to receive the control information and control at least one of the working vehicle 1 or the working device 2 based on the at least one adjustment value indicated by the control information to adjust the at least one work condition.

According to the configuration of Item 16, the controller 14 can automatically and appropriately adjust the at least one work condition relating to at least one of the working vehicle 1 or the working device 2 in accordance with the state of the soil clods on the ground surface Hs based on the at least one adjustment value indicated by the control information. The information processor 12 determines the at least one adjustment value of the at least one work condition of at least one of the traveling speed of the working vehicle 1, the rotation speed of the working blades 2g of the working device 2, the position of the working blades 2g in the vertical direction, or the contact pressure of the working plate 2h of the working device 2 against the soil, and outputs the control information. Thus, the controller 14 can automatically and appropriately adjust at least one of the traveling speed of the working vehicle 1, the rotation speed of the working blades 2g, the position of the working blades 2g, or the contact pressure of the working plate 2h based on the at least one adjustment value.

(Item 17) In the configuration of any one of Items 12 to 16, the system 100 includes a storage device (a storage device 13 or an internal memory in the information processor 12) to store agricultural field information indicating an agricultural field map MP1 representing the agricultural field H, and work record information indicating one or more worked positions Wf where the ground work has been performed by the working vehicle 1 and the working device 2 in the agricultural field H. The information processor 12 is configured to: receive the agricultural field information and the work record information; determine at least one retry area Wr of the agricultural field H where the ground work is to be performed again, based on the agricultural field map MP1, based on the work record information, and based on the soil clod information; and output control information indicating the at least one retry area Wr.

According to the configuration of Item 17, the user, the controller 14, or the like recognizes the at least one retry area Wr where the ground work is to be performed again in the agricultural field H, and manually or automatically performs the ground work again in the at least one retry area Wr by the working vehicle 1 and the working device 2. Thus, the size of the soil clods on the ground surface Hs of the at least one retry area Wr can be appropriately adjusted.

(Item 18) In the configuration of Item 17, the system 100 includes a position detector 16 to measure a position of the working vehicle 1 using a satellite positioning system, and a controller 14 configured or programmed to control the working vehicle 1 to travel by automatic operation. The controller 14 is configured or programmed to: receive the position of the working vehicle 1 measured by the position detector 16, agricultural field information, and control information; cause the working vehicle 1 to travel by the automatic operation in the agricultural field H based on the position of the working vehicle 1 and the agricultural field information; and cause the working device 2 to perform ground work in the at least one retry area Wr indicated by the control information.

According to the configuration of Item 18, the controller 14 can automatically perform the ground work again in the at least one retry area Wr of the agricultural field H by the working vehicle 1 and the working device 2, and can appropriately adjust the size of the soil clods on the ground surface Hs of the at least one retry area Wr.

(Item 19) In the configuration of any one of Items 1 to 14, the system 100 includes a controller 14 configured or programmed to control a working vehicle 1 configured to perform ground work using a working device 2 while traveling in the agricultural field H. The controller 14 is configured or programmed to receive the soil clod information, and control at least one of the working vehicle 1 or the working device 2 based on the soil clod information.

According to the configuration of Item 19 described above, the working vehicle 1 and the working device 2 are controlled in accordance with the size of the soil clods on the ground surface Hs of the agricultural field H, and the ground work is performed by the working vehicle 1 and the working device 2 in the agricultural field H. Thus, the size of the soil clods on the ground surface Hs can be appropriately adjusted.

(Item 20) A method of analyzing soil clods on a ground surface Hs of an agricultural field H according to the present example embodiment includes steps (processes) performed by the agricultural field sensor assembly 11 and the information processor 12 as described in Item 1. Additionally, the method of analyzing the soil clods according to the present example embodiment includes steps performed by at least one of the information processor 12, the agricultural field sensor assembly 11, the working vehicle 1, the controller 14, or the position detector 16 as described in any one of Items 2 to 17.

(Item 21) A working vehicle 1 according to the present example embodiment is configured to perform ground work using a working device 2 while traveling in an agricultural field H, and includes the agricultural field sensor assembly 11 and the information processor 12 as described in Item 1. Additionally, the working vehicle 1 according to the present example embodiment includes the information processor 12, the agricultural field sensor assembly 11, the working vehicle 1, the controller 14, the position detector 16, and/or the like as described in any one of Items 2 to 17.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A system (100) to analyze soil clods on a ground surface (Hs) of an agricultural field (H), the system comprising:
an agricultural field sensor assembly (11) including at least one range sensor (11a) oriented toward the ground surface; and
an information processor (12); wherein
the agricultural field sensor assembly is configured to:
measure distances to a plurality of points-of-measurement (P1) on the ground surface; and
generate primary point cloud data indicating three-dimensional positions of the plurality of points-of-measurement including measured values of the distances, and output the primary point cloud data; and
the information processor is configured to:
receive the primary point cloud data, and calculate a plurality of characteristic values based on the measured values of the distances included in the primary point cloud data;
calculate secondary point cloud data indicating three-dimensional positions of a plurality of points-of-reference (P2) including the plurality of characteristic values based on the primary point cloud data;
calculate an approximated curved surface (M2) based on the secondary point cloud data;
calculate depths of the plurality of points-of-measurement with respect to the approximated curved surface based on the approximated curved surface and the measured values of the distances; and
generate soil clod information relating to the soil clods based on the depths of the plurality of points-of-measurement, and output the soil clod information.

2. The system (100) according to claim 1, wherein the information processor (12) is configured to calculate the approximated curved surface by applying cubic spline interpolation to the secondary point cloud data.

3. The system (100) according to claim 1 or 2, wherein
the information processor (12) is configured to:
in a three-dimensional coordinate system corresponding to the primary point cloud data, divide an X-Y plane by a grid with a predetermined mesh size to define a plurality of cells (C1) on the X-Y plane, the X-Y plane being perpendicular to a Z axis indicating the measured values of the distances;
calculate the characteristic values corresponding to the cells based on the measured values of the distances to the plurality of points-of-measurement (P1) located directly above and/or directly below the cells; and
define, directly above or directly below the cells, the points-of-reference (P2) in which the corresponding characteristic values are defined as positions on the Z axis.

4. The system (100) according to claim 3, wherein the information processor (12) is configured to calculate, as each of the characteristic values, a median of the measured values of the distances to the points-of-measurement (P1) located directly above and/or directly below the corresponding cell (C1).

5. The system (100) according to claim 3 or 4, comprising a storage device (13) to store work information indicating at least one of a type of previous work in the agricultural field, a type of next work in the agricultural field, or a type of at least one crop to be grown; wherein
the information processor (12) is configured to:
receive the work information; and
determine the mesh size based on the work information.

6. The system (100) according to any one of claims 1 to 5, wherein
the information processor (12) is configured to:
in a three-dimensional coordinate system corresponding to the primary point cloud data, extract, from the approximated curved surface (M2), a plurality of points-of- interest (P5) located at the same positions in an X-Y plane as the respective corresponding points-of-measurement, the X-Y plane being perpendicular to a Z axis indicating the measured values of the distances;
determine positions of the plurality of points-of-interest on the Z axis as reference values; and
calculate, as each of the depths of the plurality of points-of-measurement (P1), a difference between (i) a corresponding one of the measured values of the distances to the plurality of points-of-measurement (P 1) and (ii) a corresponding one of the reference values of the plurality of points-of-interest (P5) corresponding to the respective plurality of points-of-measurement.

7. The system (100) according to any one of claims 1 to 6, wherein
the information processor (12) is configured to:
determine a plurality of index values for the soil clods based on the depths of the plurality of points-of-measurement (P1);
classify each of the plurality of index values into one of a plurality of ranges; and
generate the soil clod information indicating at least one of a distribution of the plurality of index values or proportions of the plurality of index values.

8. The system (100) according to any one of claims 1 to 7, wherein
the information processor (12) is configured to:
determine a plurality of index values for the soil clods based on the depths of the plurality of points-of-measurement (P1); and
calculate, as the soil clod information, at least one statistical value including at least one of a standard deviation, a variance, a skewness, or a kurtosis of the plurality of index values.

9. The system (100) according to claim 7, wherein the information processor (12) is configured to determine the plurality of ranges such that the plurality of ranges correspond to respective sieve mesh sizes of a plurality of types of sieves for use in a sieve analysis of the soil clods in the agricultural field.

10. The system (100) according to any one of claims 7 to 9, comprising a storage device to store work information indicating at least one of a type of previous work in the agricultural field, a type of next work in the agricultural field, or a type of at least one crop to be grown; wherein
the information processor (12) is configured to:
receive the work information; and
determine the plurality of ranges based on the work information.

11. The system (100) according to any one of claims 1 to 10, wherein
the information processor (12) is configured to:
calculate, based on the depths of the plurality of points-of- measurement (P1), a plurality of index values corresponding to a grain size of the soil clods, an area occupied by the soil clods on the ground surface, or a volume of the soil clods; and
generate the soil clod information indicating a distribution and proportions of the plurality of index values.

12. The system (100) according to any one of claims 1 to 11, wherein the agricultural field sensor assembly (11) is configured to measure the distances to the plurality of points-of-measurement (P1) on the ground surface of the agricultural field where ground work including clod breaking has been performed by a working vehicle (1) using a working device (2) while traveling, and generate the primary point cloud data.

13. The system (100) according to any one of claims 1 to 12, comprising a controller (14) configured or programmed to control a working vehicle (1) configured to perform ground work using a working device (2) while traveling in the agricultural field; wherein
the controller is configured or programmed to:
receive the soil clod information; and
control at least one of the working vehicle or the working device based on the soil clod information.

14. A method of analyzing soil clods on a ground surface (Hs) of an agricultural field (H), the method comprising:
causing an agricultural field sensor assembly (11) including at least one range sensor (11a) oriented toward the ground surface to:
measure distances to a plurality of points-of-measurement (P1) on the ground surface; and
generate primary point cloud data indicating three-dimensional positions of the plurality of points-of-measurement including measured values of the distances, and output the primary point cloud data; and
causing an information processor (12) to:
receive the primary point cloud data, and calculate a plurality of characteristic values based on the measured values of the distances included in the primary point cloud data;
calculate secondary point cloud data indicating three-dimensional positions of a plurality of points-of-reference (P2) including the plurality of characteristic values based on the primary point cloud data;
calculate an approximated curved surface (M2) based on the secondary point cloud data;
calculate depths of the plurality of points-of-measurement with respect to the approximated curved surface based on the approximated curved surface and the measured values of the distances; and
generate soil clod information relating to the soil clods based on the depths of the plurality of points-of-measurement, and output the soil clod information.

15. A working vehicle (1) to perform ground work using a working device (2) while traveling in an agricultural field (H), the working vehicle comprising:
an agricultural field sensor assembly (11) including at least one range sensor (11a) oriented toward a ground surface (Hs) of the agricultural field; and
an information processor (12); wherein
the agricultural field sensor assembly is configured to:
measure distances to a plurality of points-of-measurement (P1) on the ground surface; and
generate primary point cloud data indicating three-dimensional positions of the plurality of points-of-measurement including measured values of the distances, and output the primary point cloud data; and
the information processor is configured to:
receive the primary point cloud data, and calculate a plurality of characteristic values based on the measured values of the distances included in the primary point cloud data;
calculate secondary point cloud data indicating three-dimensional positions of a plurality of points-of-reference (P2) including the plurality of characteristic values based on the primary point cloud data;
calculate an approximated curved surface (M2) based on the secondary point cloud data;
calculate depths of the plurality of points-of-measurement with respect to the approximated curved surface based on the approximated curved surface and the measured values of the distances; and
generate soil clod information relating to the soil clods on the ground surface based on the depths of the plurality of points-of- measurement, and output the soil clod information.
